# EUROPEAN PATENT APPLICATION

(11) **EP 4 468 793 A1**
(43) Date of publication of application: **27.11.2024**
(21) Application number: 24173747.7
(22) Date of filing: 02.05.2024
(51) Int. Cl.: H04W 52/02, H04W 84/12

(54) **DYNAMIC WINDOW ACCESS POINT (AP) POWER SAVE ENHANCEMENTS**

(30) Priority: 03.05.2023 US 202363499957 P; 10.04.2024 US 202418631795
(71) Applicant: Apple Inc., Cupertino, CA 95014 (US)
(72) Inventor: THAKUR, Sidharth R., San Jose (US); KNECKT, Jarkko L., Los Gatos (US); LIU, Yong, Campbell (US); WU, Tianyu, Monterey (US); HEDAYAT, Ahmad Reza, Carlsbad (US); JIANG, Jinjing, Campbell (US); YONG, Su Khiong, Palo Alto (US); WANG, Qi, Sunnyvale (US); VERMA, Lochan, Danville (US)
(74) Representative: COPA Copenhagen Patents

(57) **Abstract**

Some embodiments include an apparatus, method, and computer program product for dynamic window access point (AP) power save enhancements. Some embodiments include transmitting an availability window (AW) of an AP to stations (STAs) and dynamically modifying the AW. In some embodiments, a mobile device may perform soft AP functions and associate with the stations. The modifications can include truncating or extending the AW. Some embodiments include: a broadcast availability frame that informs STAs of the modified AW; an Availability Clear To Send (A-CTS) frame that allows the AP to inform associated STAs of the modified AW; and/or an uplink (UL) multi-user (MU)-Request to Send (RTS) Enabled feature, that allows an AP to be available while operating in a low power receive (LPR) state (e.g., low power mode) and transition to a full power state to receive data using a bandwidth greater than 20 MHz.

## Description

### CROSS REFERENCE TO RELATED APPLICATIONS

This application claims the benefit of U.S. Provisional Application No. 63/499,957, filed on May 03, 2023, which is incorporated herein by reference in its entirety.

### BACKGROUND

### Field

The described embodiments relate generally to access point (AP) power saving in a wireless communications system.

### Related Art

Wireless communications systems support communications between an access point (AP) and a communications device, such as a station (STA).

### SUMMARY

Some embodiments include a system, apparatus, article of manufacture, method, and/or computer program product and/or combinations and sub-combinations thereof, for dynamic window access point (AP) power save enhancements.

In some embodiments, an AP can transmit, via a transceiver (e.g., a data radio) a beacon. The beacon can indicate an availability window (AW) of a first duration. The AP may receive first data within the first duration via the transceiver. The AP may modify (e.g., extend) the AW during the first duration by a second duration, and transition the transceiver to a power save state after the AW expires. The second duration may extend the AW until a next beacon transmission time and the AP may modify the AW by a third duration. In some embodiments, the beacon may be a Traffic Indication Map (TIM) beacon or a Delivery Traffic Indication Map (DTIM) beacon. In some instances, the first duration of the AW corresponding to the TIM beacon may be shorter than the first duration of the AW corresponding to the DTIM beacon.

In some embodiments, the AP may receive, via the transceiver operating in a low power receive (LPR) state, a wake-up frame within the first duration. For example, the wake-up frame can be an uplink (UL) Multi-user (MU)-Request to Send (RTS) frame or a data frame. The AP may transition the transceiver to a full power state (or a higher power state) responsive to receiving the wake-up frame.

In some embodiments, the AP may transmit a wake-up response frame responsive to receiving the wake-up frame. The AP may receive second data via the transceiver operating in the full power state (or higher power state). The wake-up response frame can indicate the second duration of the AW and the wake-up response frame can be configured to be received by one or more stations (STAs) associated with the AP. The wake-up response frame may be an Availability Clear To Send (A-CTS) frame and a Receiver Address (RA) field of the A-CTS frame can indicate an address of the AP.

In some embodiments, the beacon indicates a wake-up response time. The AP may initiate transmission of an AP availability frame within the wake-up response time. The AP availability frame can include the second duration that specifies the availability of the AP to associated STAs during the second duration. The AP may transition the transceiver to the full power state (or higher power state) within the wake-up response time. The AP may receive second data via the transceiver operating in the full power state. The AP may transmit a trigger frame to a STA corresponding to the wake-up frame, subsequent to the AP availability frame.

In some embodiments, a STA may receive a beacon indicating an AW that has a first duration. The STA may transmit first data within the first duration and receive an Access Point (AP) availability frame during the first duration. The AP availability frame can indicate a second duration modifying the AW. The STA may transmit, via the transceiver, a wake-up frame during the AW. In some instances, the wake-up frame can be an MU-RTS frame or a data frame.

In some embodiments, the STA may receive a wake-up response frame indicating the second duration of the AW and configured to be received by one or more STAs associated with the AP. The STA may transmit second data via the transceiver during the second duration of the AW. The wake-up response frame can include an Availability Clear To Send (A-CTS) frame in which a receiver address (RA) field of the A-CTS frame indicates an address of the AP.

In some embodiments, the beacon indicates a wake-up response time. The STA may receive the AP availability frame within the wake-up response time. The AP availability frame can indicate the second duration, specifying availability of the AP to one or more associated STAs during the second duration. The STA may receive a trigger frame subsequent to the AP availability frame and may transmit second data in response to the trigger frame.

### BRIEF DESCRIPTION OF THE FIGURES

The accompanying drawings, which are incorporated herein and form part of the specification, illustrate the presented disclosure and, together with the description, further serve to explain the principles of the disclosure and enable a person of skill in the relevant art(s) to make and use the disclosure.
FIG. 1 illustrates an example system for dynamic window access point (AP) power save enhancements, in accordance with some embodiments of the disclosure.
FIG. 2A illustrates a block diagram of an example wireless system for dynamic window AP power save enhancements, according to some embodiments of the disclosure.
FIG. 2B illustrates an example of AP radios, according to some embodiments of the disclosure.
FIG. 3A illustrates an example of dynamic window AP power save enhancements, according to some embodiments of the disclosure.
FIG. 3B illustrates an example of dynamic window AP power save enhancements with an auxiliary radio feature, according to some embodiments of the disclosure.
FIG. 3C illustrates an example of dynamic window AP power save enhancements but without an auxiliary radio feature, according to some embodiments of the disclosure.
FIG. 4 illustrates an example of dynamic window AP power save enhancements using Traffic Indication Map (TIM) beacons and Delivery Traffic Indication Map (DTIM) beacons, according to some embodiments of the disclosure.
FIG. 5 illustrates an example of dynamic window AP power save enhancements including a wake-up response frame, according to some embodiments of the disclosure.
FIG. 6 illustrates an example of dynamic window AP power save enhancements using an Availability Clear To Send (A-CTS) frame, according to some embodiments of the disclosure.
FIG. 7A illustrates an example of AP availability using CTS, according to some embodiments of the disclosure.
FIG. 7B illustrates an example of dynamic window AP power save enhancements using A-CTS, according to some embodiments of the disclosure.
FIG. 8 illustrates an example of dynamic window AP power save enhancements including a wake-up response time, according to some embodiments of the disclosure.
FIG. 9 illustrates an example of AP power save enhancements using A-CTS, according to some embodiments of the disclosure.
FIG. 10A illustrates an example of an AP power save enhancement for an uplink (UL) transmission opportunity (TXOP), according to some embodiments of the disclosure.
FIG. 10B illustrates an example of an AP power save enhancement extending an AW to a next beacon based on a first UL TXOP, according to some embodiments of the disclosure.
FIG. 11 illustrates an example of a broadcast availability frame for dynamic window AP power save enhancements, according to some embodiments of the disclosure.
FIG. 12 illustrates example of an information element for dynamic window AP power save enhancements, according to some embodiments of the disclosure.
FIG. 13 illustrates an example method for dynamic window AP power save enhancements, according to some embodiments of the disclosure.
FIG. 14 illustrates an example method for a STA communicating with an AP using dynamic window AP power save enhancements, according to some embodiments of the disclosure.
FIG. 15 is an example computer system for implementing some embodiments or portion(s) thereof.
FIG. 16 illustrates an example of AP high power consumption according to some embodiments of the disclosure.

The presented disclosure is described with reference to the accompanying drawings. In the drawings, generally, like reference numbers indicate identical or functionally similar elements. Additionally, generally, the left-most digit(s) of a reference number identifies the drawing in which the reference number first appears.

### DETAILED DESCRIPTION

Some embodiments include a system, apparatus, article of manufacture, method, and/or computer program product and/or combinations and sub-combinations thereof, for dynamic window access point (AP) power save enhancements. A mobile device can perform soft AP functions that enable other devices to access network via the mobile device (e.g., a mobile AP or a mobile AP station). Dynamic window AP power save enhancements can reduce power consumption for mobile devices performing soft AP functions and reduce power consumption for APs as well.

Access points (APs) including mobile AP STAs communicating with stations (STAs) via Wi-Fi can operate with high power consumption. Associated STAs including legacy STAs assume that the AP is always available to receive transmissions with the maximum supported: bandwidth (BW), number of special streams (NSS), and modulation coding scheme (MCS). Thus, the AP power consumption can be high even when the traffic load is low (e.g., when no one is at home, after work hours in an office building or in an environment when no one is present).

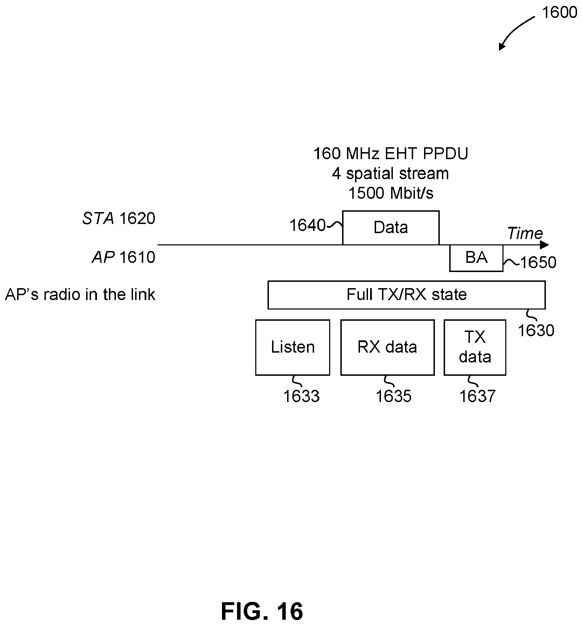

FIG. 16 illustrates example 1600 of AP high power consumption according to some embodiments of the disclosure. Example 1600 illustrates communication between STA 1620 and AP 1610, in which AP 1610 operates with high power consumption, e.g., shown as full transmit (TX)/receive (RX) mode 1630. During full TX/RX mode 1630, AP 1610 can listen during a listen1633 portion, receive data 1640 from STA 1620 during RX data 1635 portion, and transmit a block acknowledgement (BA) 1650 to STA 1620 during TX data 1637 portion. Thus, even when the traffic load is low, or non-existent, AP 1610 still operates in full TX/RX mode 1630 with high power consumption. Some embodiments include dynamic window AP power save enhancements that reduce power consumption for APs, including mobile APs and mobile AP STAs.

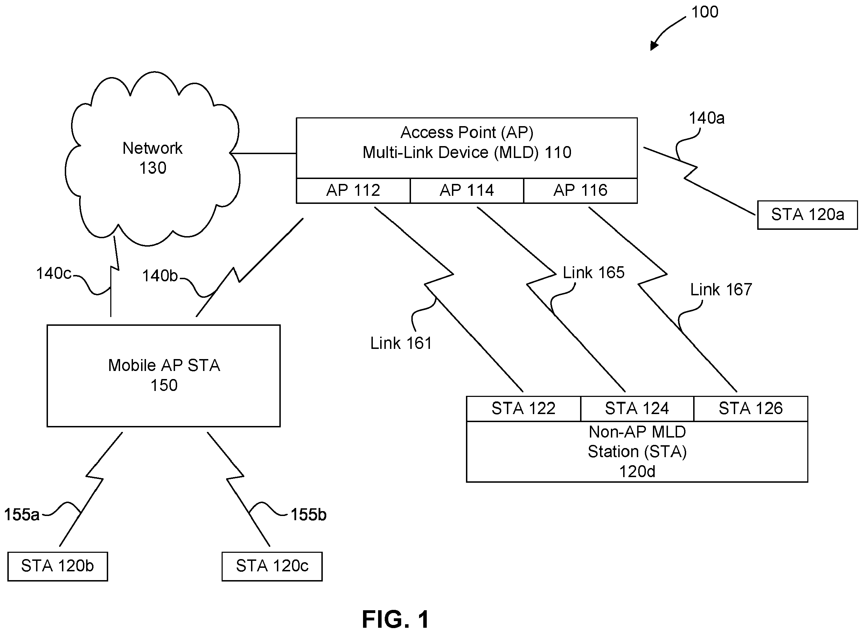

FIG. 1 illustrates example system 100 for dynamic window access point (AP) power save enhancements, in accordance with some embodiments of the disclosure. Example system 100 is provided for the purpose of illustration only and is not limiting of the disclosed embodiments. System 100 may include, but is not limited to, AP multi-link device (MLD) 110 that provides non-AP MLD station (STA) 120d, STAs 120a, 120b, and 120c, and mobile AP STA 150 with access to network 130. AP MLD 110 may include multiple APs 112, 114, and 116 that correspond to various respective links. For example, AP 112 can communicate via 2.4 GHz identified by link 161; AP 114 can communicate via 5 GHz identified by link 165, and AP 116 can communicate via 6 GHz identified by link 167. In other examples, an AP MLD can include APs that communicate on two links. AP 112, AP 114, and AP 116 may each have a radio transceiver that operates independently from the other radio transceivers. For example, AP MLD 110 can utilize one or more radios (e.g., 3 transceivers) to communicate over multiple links (e.g., over one or more frequency bands) to non-AP MLD STA 120a. For example, AP MLD 110 can utilize transceivers of AP 112, AP 114, and/or AP 116 to communicate with STA 120a via link 161, link 165, and/or link 167 shown as communication 140a.

Non-AP MLD STAs 122, 124, 126 of non-AP MLD STA 120d, and mobile AP STA 150 in proximity to AP MLD 110 may associate with AP MLD 110. For example, Non-AP MLD STA 120d can scan and identify AP MLD 110 across all three links or on multiple links. After associating with AP MLD 110, non-AP MLD STA 120d can communicate via any of the links link 161, link 165, and/or link 167 that are available in, for example, three different frequency bands, e.g., 2.4 GHz, 5 GHz, and 6 GHz. If one link is busy, non-AP MLD STA 120d or AP MLD 110 selects another link, e.g., that is first available or otherwise preferred.

STAs 120a, 120b, and 120c can be non-MLD STAs (e.g., a STA with a single transceiver). Mobile AP STA 150 may communicate with AP MLD 110 via one of AP 112, AP 114, or AP 116 shown as communication 140b. In some embodiments, Mobile AP STA 150 may also access Network 130 directly through link 140c. Network 130 may be a wired network, a wireless network, or a combination thereof.

Mobile AP station 150 is different than a conventional mobile device that performs soft AP functions that enable other devices to access network 130, because a conventional mobile device performing soft AP functions cannot enter a power save mode. In contrast, mobile AP station 150 can be a mobile device that operates in an always-on soft AP mode that provides soft AP mode functions for enabling STA 120b and STA 120c to access network 130 via communications 155a and 155b, respectively. Mobile AP station 150 is also capable of switching back to infrastructure mode to operate as an associated station in an infrastructure mode with an AP (e.g., AP MLD 110).

Non-AP MLD STAs 122, 124, 126, STAs 120a, 120b, 120c, 120d and/or mobile AP STA 150, can be electronic devices that may include, but are not limited to, a cellular phone, a smart phone, a tablet, a personal digital assistant (PDA), a laptop, or other such device. In some embodiments, any/all of STA 120a-120c may be a legacy device that does not support RTS Enabled or UL Multi-User-Request To Send (MU-RTS) Enabled capabilities. Network 130 may include, but is not limited to, any of or any combination of local area networks (LANs), metropolitan area networks (MANs), wireless local area networks (WLANs), and/or the Internet. In some embodiments, AP 110 may not be an MLD, where AP 110 may include a single transceiver.

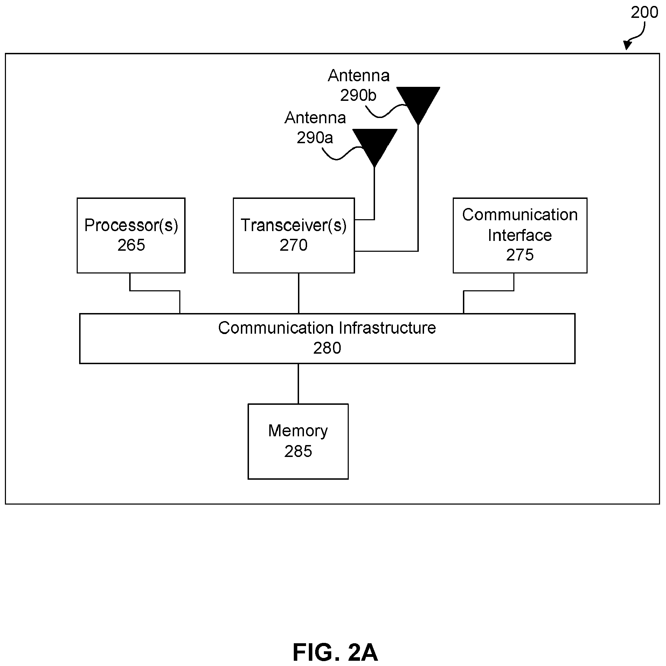

FIG. 2A illustrates a block diagram of example wireless system 200 for dynamic window AP power save enhancements, according to some embodiments of the disclosure. For explanation purposes and not a limitation, FIG. 2A may be described with reference to elements from FIG. 1. For example, system 200 may be any of the electronic devices: AP MLD 110, AP 112, AP 114, AP 116, non-AP MLD STA 120d, STA 122, STA 124, STA 126, STA 120a-120c, or mobile AP STA 150 of system 100. System 200 includes one or more processors 265, transceiver(s) 270, communication interface 275, communication infrastructure 280, memory 285, and antenna 290. Memory 285 may include random access memory (RAM) and/or cache, and may include control logic (e.g., computer instructions) and/or data. One or more processors 265 can execute the instructions stored in memory 285 to perform operations enabling wireless system 200 to transmit and receive wireless communications, including the functions for AP power save enhancements herein. In some embodiments, one or more processors 265 can be "hard coded" to perform the functions described herein. Transceiver(s) 270 transmits and receives wireless communications signals including wireless communications supporting AP power save enhancements according to some embodiments, and may be coupled to one or more antennas 290 (e.g., 290a, 290b). In some embodiments, a transceiver 270a (not shown) may be coupled to antenna 290a and different transceiver 270b (not shown) can be coupled to antenna 290b. Communication interface 275 allows system 200 to communicate with other devices that may be wired and/or wireless. Communication infrastructure 280 may be a bus. Antenna 290 may include one or more antennas that may be the same or different types.

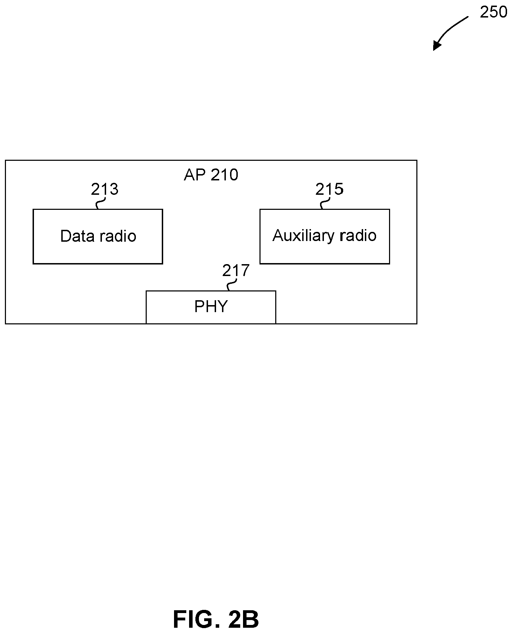

FIG. 2B illustrates example 250 of AP radios, according to some embodiments of the disclosure. For explanation purposes and not a limitation, FIG. 2B may be described with reference to elements from FIG. 1. For example, AP 210 may be any of the electronic devices: AP MLD 110, AP 112, AP 114, AP 116, or mobile AP STA 150 of system 100. AP 210 may include data radio 213 and auxiliary radio 215 that are configured to communicate to a link via PHY 217 (e.g., a physical layer). Auxiliary radio 215 may receive 20 MHz bandwidth (BW) and may not be capable of transmitting. For example, auxiliary radio 215 may receive at 6, 12, or 24 Mb/s rates. In contrast, data radio 213 may be configured to transmit and/or receive 20-320 MHz BW, one or more special streams (SS), and multiple data rates (e.g., at various modulation coding schemes (MCSs)). In some embodiments, data radio 213 may operate with a low data rate and low power mode. AP 210 may use the radios in different availability states as shown below in Table 1.

**Table 1. AP Radio Use in Different Availability States**

| **Name** | **Description** | |
|---|---|---|
| Full power state | AP 210 has data radio 213 on with full receive and transmit capabilities operating on the link. | |
| Low power receive (LPR) state | AP 210 has auxiliary radio 215 in use for the link. Data radio 213 is in warm sleep and AP 210 can activate data radio 213 in a short time such as within a Short Interframe Spacing (SIFS) only for 20 MHz BW transmissions. | In another example, data radio 213 is configured to operate in 20 MHz BW, with 1SS and low MCSs. |
| Radio OFF | AP 210 has auxiliary radio 215 and data radio 213 off for the link. | |

In a full power state (or a high power state), AP 210 experiences high power consumption and uses data radio 213 with full receive and transmit capabilities. In Low Power Receive (LPR) state (or a lower power state), AP 210 can reduce power consumption relative to a higher power state. For example, AP 210 can operate with auxiliary radio 215, while data radio 213 is in a warm sleep or other such reduced power state. For example, the auxiliary radio can receive a wake-up frame and detect that the data radio should be fully powered. Data radio 213 activation may take the padding + SIFS duration to be fully activated to operate with full receive and transmit capabilities, and the data radio may send a wake-up response frame after receiving a wake-up frame. Data radio 213 can utilize the full transmission BW, NSS, etc. In some embodiments, AP 210 may activate data ratio 213 in a SIFS for low rate (e.g., 20 MHz BW) transmissions. In the LPR state, data radio 213 may be on, but configured to operate in 20 MHz BW, e.g., with one SS and/or with low MCSs. In some embodiments, AP 210 can transition from the LPR state to the full power state to operate with full receive and transmit capabilities.

In the radio OFF state, AP 210 can turn both auxiliary radio 215 and data radio 213 off. In some embodiments, AP 210 may not have auxiliary radio 215. For example, AP 210 may be available in a full power state or an LPR state, e.g., when the data radio 213 is on.

In some embodiments, auxiliary radio 215 may operate in both transmitting and receiving modes, and auxiliary radio 215 may transmit at a low data rate, for example, transmitting with 20MHz BW and at 6, 12, or 24 Mb/s rates.

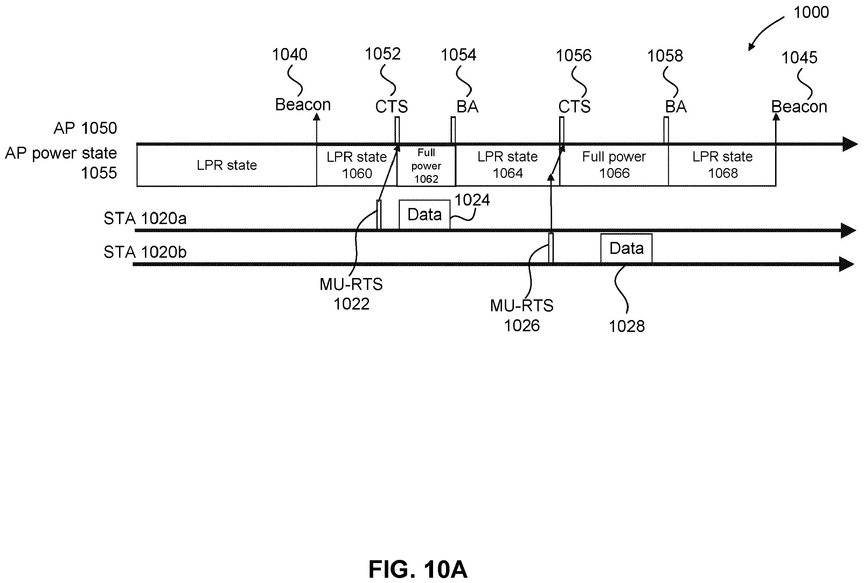

FIG. 10A illustrates example 1000 of an AP power save enhancement for an uplink (UL) transmission opportunity (TXOP), according to some embodiments of the disclosure. For explanation purposes and not a limitation, FIG. 10A may be described with reference to elements from FIGS. 1 - 2B. For example, AP 1050 may be any of the electronic devices: AP MLD 110, AP 112, AP 114, AP 116, or mobile AP STA 150 of system 100. STAs 1020a and 1020b may be any of the electronic devices: non-AP MLD STA 120d, STA 122, STA 124, STA 126, STA 120a-120c, or mobile AP STA 150 of system 100. AP 1050 and STAs 1020a and 1020b can be a system 200 of FIG. 2A. AP 1050 and STAs 1020a and 1020b can include radios as shown in example 250 of FIG. 2B.

Example 1000 shows an example AP power save enhancement when AP 1050 has an auxiliary radio. AP 1050 may save power by staying in a power save state with the auxiliary radio on, and transition to a full power mode when awoken by a STA. In example 1000, AP 1050 remains in an LPR state power save mode after transmitting a beacon, and transitions to a full power state (or a higher power state) in response to a request for an uplink (UL) transmission opportunity (TXOP) from an associated STA. In example 1000, AP 1050 transitions to a power save mode in LPR state 1060 after transmitting beacon 1040. AP 1050 may have the auxiliary radio active in LPR state 1060. If STA 1020a has UL data to transmit, STA 1020a transmits MU-RTS frame 1022 to wake up AP 1050 (e.g., enable data radio 213 to utilize the full transmission BW, NSS, etc.). MU-RTS frame 1022 may include a padding delay, e.g., so AP 1050 may have enough time to transition from LPR state 1060 to full power state 1062. MU-RTS frame 1022 padding size may be indicated by beacon 1040 or during association (e.g., an association response). After entering into full power state 1062, AP 1050 transmits CTS frame 1052. CTS frame 1052 may be configured to be received by STA 1020a. CTS frame 1052 may signal current availability of AP 1050 based on the duration request in MU-RTS frame 1022. For example, CTS frame 1052 may signal a duration of full power state 1062 to STA 1020a. After receiving CTS frame 1052, STA 1020a may start transmitting data block 1024. After receiving data block 1024, AP 1050 transmits BA 1054 and enters a power save state, for example, entering into LPR state 1064.

If STA 1020b has UL data to transmit, STA 1020b can transmit MU-RTS frame 1026 to wake up AP 1050. STA 1020b may start transmitting data block 1028 after receiving CTS 1056 from AP 1050. CTS frame 1056 may be configured to be received by STA 1020b and may signal availability of AP 1050, e.g., based on the duration request in MU-RTS frame 1026. AP 1050 transitions from full power state 1066 to LPR state 1068 after transmitting BA 1058 to STA 1020b. In example 1000, AP 1050 returns to an LPR state after transmitting a BA to the corresponding STA.

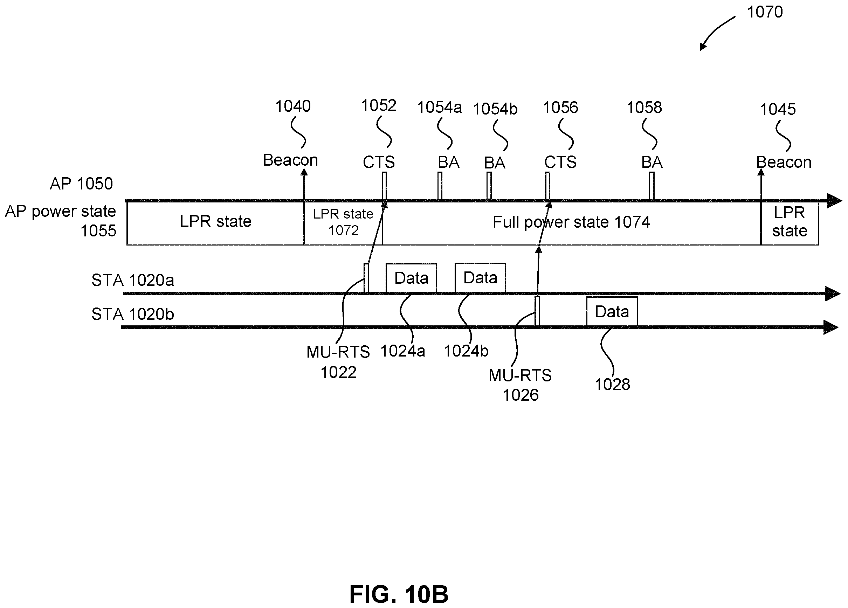

FIG. 10B illustrates another example 1070 of an AP power save enhancement extending an AW to a next beacon based on a first UL TXOP, according to some embodiments of the disclosure. For explanation purposes and not a limitation, FIG. 10B may be described with reference to elements from FIGS. 1 - 2B. For example, AP 1050 may be any of the electronic devices: AP MLD 110, AP 112, AP 114, AP 116, or mobile AP STA 150 of system 100. STAs 1020a and 1020b may be any of the electronic devices: non-AP MLD STA 120d, STA 122, STA 124, STA 126, STA 120a-120c, or mobile AP STA 150 of system 100. AP 1050 and STAs 1020a and 1020b can be a system 200 of FIG. 2A. AP 1050 and STAs 1020a and 1020b can include a radio as shown in example 250 of FIG. 2B.

In example 1070, AP 1050 remains in an LPR state power save mode after a beacon, and transitions to a full power state (or a higher power state) in response to a first request for an UL TXOP from an associated STA. In contrast to example 1000, however, AP 1050 remains in the full power state until the next beacon. For example, AP 1050 may be in a power save mode in LPR state 1072 after transmitting beacon 1040 and/or other data. If STA 1020a has UL data to transmit, STA 1020a transmits MU-RTS frame 1022 to wake up AP 1050. MU-RTS frame 1022 may include padding, e.g., so AP 1050 may have enough time to transition from LPR state 1072 to full power state 1074. MU-RTS frame 1022 padding size may be indicated by beacon 1040. After entering into full power state 1074, AP 1050 transmits CTS frame 1052. CTS frame 1052 may be configured to be received by STA 1020a. In example 1070, CTS frame 1052 signals that AP 1050 will remain available until the transmission of a next beacon (e.g., beacon 1045). For example, CTS frame 1052 can signal a duration of full power state 1074 to STA 1020a, which extends to the transmission of beacon 1045. After receiving CTS frame 1052, STA 1020a may start transmitting data blocks 1024a and 1024b, as long as data bocks 1024a and 1024b are transmitted before the transmission of next beacon 1045. Note that STA 1020a does not transmit an MU-RTS frame corresponding to data block 1024b.

If STA 1020b has UL data to transmit, STA 1020b transmits MU-RTS frame 1026 to wake up AP 1050. STA 1020b may start transmitting data block 1028 after receiving CTS 1056 from AP 1050. If either of STAs 1020a and 1020b has more data to send before the transmission of beacon 1045, STAs 1020a and 1020b do not send another MU-RTS frame because AP 1050 remains in full power state 1074 until the transmission of beacon 1045.

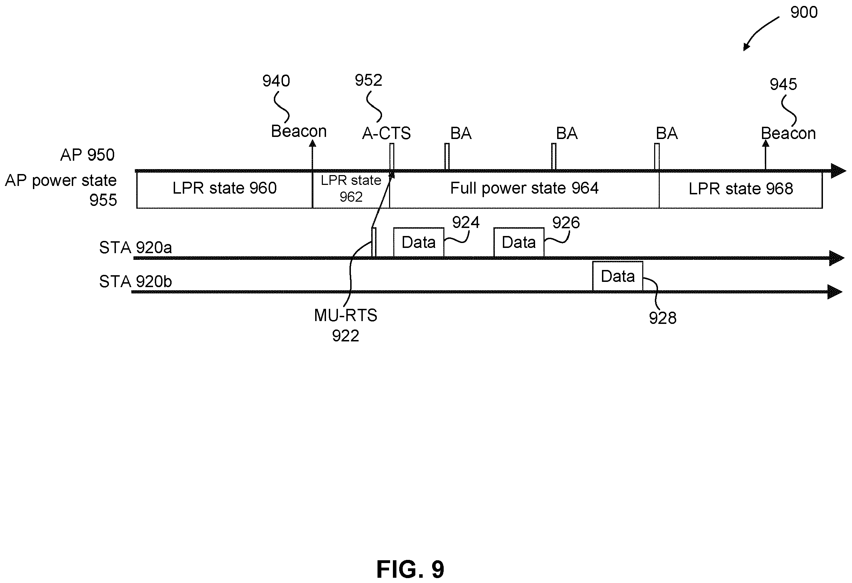

FIG. 9 illustrates example 900 of AP power save enhancements using A-CTS, according to some embodiments of the disclosure. For explanation purposes and not a limitation, FIG. 9 may be described with reference to elements from FIGS. 1 - 2B. For example, AP 950 may be any of the electronic devices: AP MLD 110, AP 112, AP 114, AP 116, or mobile AP STA 150 of system 100. STAs 920a and 920b may be any of the electronic devices: non-AP MLD STA 120d, STA 122, STA 124, STA 126, STA 120a-120c, or mobile AP STA 150 of system 100. AP 950 and STAs 920a and 920b can be a system 200 of FIG. 2A. AP 950 and STAs 920a and 920b can include radios as shown in example 250 of FIG. 2B.

In example 900, AP 950 remains in an LPR state power save mode after transmitting a beacon, and changes to a full power state in response to a first request for an UL TXOP from an associated STA (e.g., STA 920a). AP 1050 can inform the associated stations (STA 920a and STA 920b) via an availability-CTS (A-CTS) frame of the full power state duration of AP 1050. Thus, based on the A-CTS frame received, STA 920b does not transmit an MU-RTS before transmitting data to AP 1050, in contrast to examples 1000 and 1070. In example 900, AP 950 is in LPR state 960. After transmitting beacon 940 and other data, AP 950 goes back to power save mode in LPR state 962. If STA 920a has UL data to transmit, STA 920a transmits MU-RTS frame 922 to wake up AP 950. MU-RTS frame 922 may include padding so AP 950 may have enough time to transition from LPR state 962 to full power state 964. MU-RTS frame 922 padding size may be transmitted by beacon 940. After entering to full power state 964, AP 950 transmits A-CTS frame 952. A-CTS frame 952 is configured to be received by STAs associated with AP 950, for example STAs 920a and 920b. A-CTS frame 952 may signal current and future availability of AP 950. For example, A-CTS frame 952 signals duration of full power state 964 to STAs associated with AP 950, including STAs 920a and 920b. After receiving A-CTS frame 952, STA 920a may start transmitting data blocks 924 and 926, and receive corresponding BAs, as long as the data transmissions and BA receptions are within the duration of full power state 964. STA 920b may also transmit data block 928 within the duration of full power state 964, without first transmitting a MU-RTS frame and receive a corresponding BA. In example 900, AP 950 transitions back to power save mode in LPR state 968 until the transmission of next beacon 945.

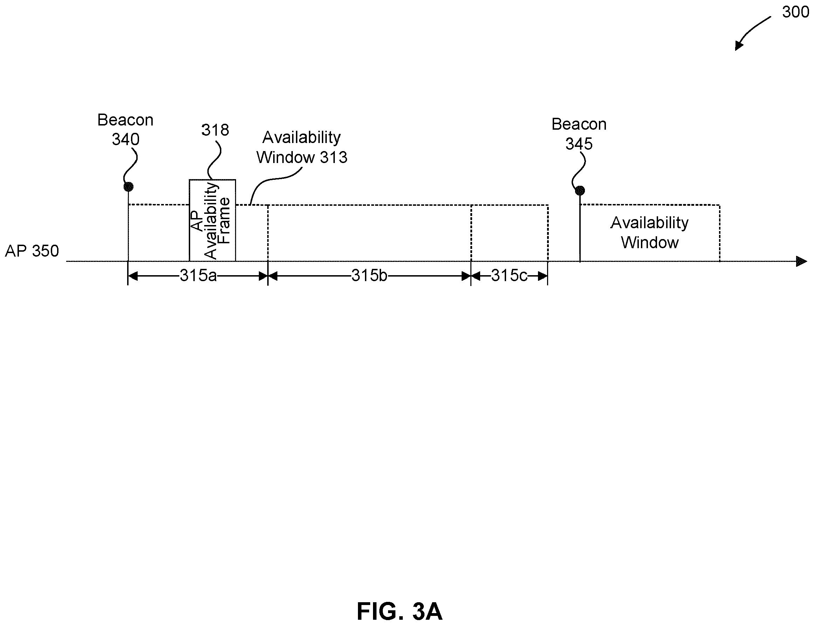

FIG. 3A illustrates example 300 of dynamic window AP power save enhancements, according to some embodiments of the disclosure. For explanation purposes and not a limitation, FIG. 3A may be described with reference to elements from FIGS. 1 - 2B. For example, AP 350 may be any of the electronic devices: AP MLD 110, AP 112, AP 114, AP 116, or mobile AP STA 150 of system 100. AP 350 can be a system 200 of FIG. 2A and AP 350 can have radios as shown in example 250 of FIG. 2B.

In some embodiments, AP 350 signals AW 313 in beacon 340. It is to be appreciated that while only two beacons are illustrated in FIG. 3A, there may be more beacons. AW 313 may begin after beacon 340 with duration 315a, which can be signaled in an information element in beacon 340. AP 350 is available within duration 315a of AW 313 and can receive transmissions from associated STAs. For example, AP 350 may be available by turning on a data radio (e.g., data radio 213 of FIG. 2B) during the duration 315a of AW 313, so AP 350 is able to receive transmissions from STAs associated with AP 350. If AP 350 has an auxiliary radio, (e.g., auxiliary radio 215 of FIG. 2B), AP 350 may be available by keeping the auxiliary radio on to save power during the duration 315a of AW 313. AP 350 may receive low rate transmissions from associated STAs via the auxiliary radio, for example, a wake-up frame, and activate the data radio of AP 350. In some examples, a beacon interval between beacons 340 and 345 may be 100 ms, and duration 315a of AW 313 may be approximately 10% of the beacon interval, such as 5~10 ms, to enable aggressive AP power save. Different configurations of AW duration may be based on, but not limited to, traffic patterns, channel congestion level, STA power save modes, transmission delays, minimal mandatory durations, power save requirements, etc.

In some embodiments, AP 350 may dynamically modify AW 313 by duration 315b. In some embodiments, duration 315b may extend AW 313 until the transmission of beacon 345 (not shown). AP 350 may transmit duration 315b to associated STAs via AP availability frame 318. AP availability frame 318 may be a broadcast frame, or a wake-up response frame responding to a wake-up frame from a STA, targeting STAs associated with AP availability frame 318, or an unsolicited frame targeting one or more STAs associated with AP availability frame 318. In some embodiments, AP availability frame 318 may keep AW 313 unmodified, extend AW 313, or truncate AW 313. It is also to be appreciated that other methods may be used by AP availability frame 318 to transmit information related to duration 315b to associated STAs.

In some embodiments, AP availability frame 318 may further extend AW 313 by duration 315c. The decision to dynamically extend AW 313 may be based on, but not limited to, traffic patterns, power save requirements, signaled indications of the buffered data, the number of STAs that request availability window extension, etc. When AW 313 expires, e.g., after duration 315a, 315b, and/or 315c, AP 350 may transition the transceiver to a power save state. For example, AP 318 turns off the data radio. If AP 350 is equipped with an auxiliary radio, AP 350 may keep the auxiliary radio on while turning off the data radio. Additionally or alternatively, AP 350 may turn off both the data radio and auxiliary radio when entering into the power save state. In some embodiment, AP 350 may have an ongoing transmit opportunity (TXOP) even after AW 313 expires. AP 350 may choose to complete the TXOP before transitioning to the power save state, effectively extending a duration of AW 313.

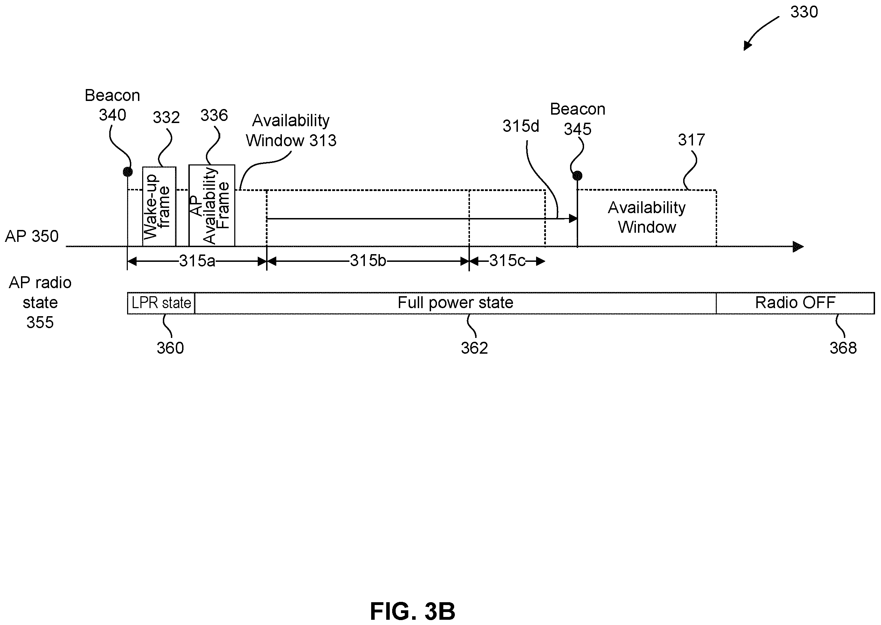

FIG. 3B illustrates example 330 of dynamic window AP power save enhancements with an auxiliary radio feature, according to some embodiments of the disclosure. For explanation purposes and not a limitation, FIG. 3B may be described with reference to elements from FIGS. 1 - 2B. For example, AP 350 may be any of the electronic devices: AP MLD 110, AP 112, AP 114, AP 116, or mobile AP STA 150 of system 100. AP 350 can be a system 200 of FIG. 2A and can include radios as shown in example 250 of FIG. 2B.

In example 330, AP 350 can signal duration 315a of AW 313 in a beacon (e.g., beacon 340). In some embodiments, duration 315a can be short (e.g., 5 ms - 10 ms) enabling aggressive AP 350 power savings. During AW 313, an associated STA may send a Wake-up frame 332 to AP 350. In some embodiments, AP 350 can limit a duration of a TXOP within AW 313 (e.g., 1 ms, 5 ms, etc.). In some embodiments, AP 350 can choose to extend AW 313 and the changed AP 350 availability can be signaled to one or more other awake STAs in the BSS (e.g., signaled to associated STAs). In some embodiments, after receiving Wake-up frame 332, AP 350 can extend AW 313 by transmitting an AP availability frame (e.g., an A-CTS frame or a broadcast AP availability frame).

Example 330 provides details of power saving techniques when AP 350 is equipped with an auxiliary radio, for example, auxiliary radio 215 of FIG. 2B. In some embodiment, AP 350 signals AW 313 in beacons 340 and 345. It is to be appreciated that while only two beacons are illustrated in FIG. 3B, there may be more beacons in practice. AW 313 may begin after beacon 340 with duration 315a. In some embodiments, a duration of AW 313 may be signaled in an information element in beacon 340. AP 350 is available within duration 315a of AW 313. For example, AP 350 may be available by keeping the auxiliary radio on during the duration 315a of AW 313. AP 350 may receive low rate transmissions from STAs via the auxiliary radio, for example, a Wake-up frame 332 during LPR state 360, and activate the data radio of AP 350 transitioning to full power state 362. AP 350 may respond to Wake-up frame 332 by sending AP availability frame 336. The AP availability frame 336 may contain information regarding the availability of AP 350 (e.g., an extension or truncation of AW 313). For example, AP 350 may signal that the data radio of AP 350 is turned on for a different duration (e.g., AW 313 is now extended by duration 315b) instead of duration 315a as indicated in beacon 340. Associated STAs receive this information and do not transmit a subsequent wake-up frame for duration 315b since AP 350 has transitioned to a full power state. In some embodiments, AP availability frame 336 may be a broadcast availability frame that STAs associated with AP 350 may receive. In some embodiments, AP availability frame 336 may be a control frame configured to be received by STAs associated with AP 350. For example, AP availability frame 336 may be an availability CTS (A-CTS) frame that is configured so that STAs associated with AP 350 may receive the A-CTS frame.

In some embodiments, the auxiliary radio of AP 350 may be configured to both receive and transmit. Thus,the auxiliary radio of AP 350 may receive Wake-up frame 332 and transmit the A-CTS frame in response to receiving Wake-up frame 332.

In some embodiments, Wake-up frame 332 may be an uplink (UL) multi-user (MU) - Request to Send (RTS) frame or Wake-up frame 332 may be a data frame with a low transmission rate that auxiliary radio of AP 350 can receive. In some embodiments, a wake-up frame may be a Multi-user Physical Layer Protocol Data Unit (MU-PPDU) in which the preamble of the MU-PPDU identifies AP 350 as the receiver.

In some embodiments, AP availability frame 336 is sent within the duration 315a of AW 313. AP availability frame 336 may be used by AP 350 to dynamically modify (e.g., extend) AW 313 by duration 315b. In some embodiments, during duration 315b, AP 350 may transmit another availability frame (not shown) to dynamically extend AW 313 by duration 315c.

In some embodiments, AP 350 can inform associated STAs that AW 313 has been extended until the transmission of beacon 345, shown as duration 315d, by transmitting AP availability frame 336. In some embodiments, AP 350 may adjust AP radio state 355. For example, AP 350 is in low power receive (LPR) state 360 in AW 313. During LPR state 360, AP availability frame 336 may utilize an auxiliary radio and the data radio may be turned off. When AP 350 receives Wake-up frame 332, AP 350 starts to transition to a full power state 362, for example, AP availability frame 336 starts to turn on a data radio. AP 350 can transmit AP availability frame 336 indicating that the data radio may remain active until AW 313 expires. In this example, AP availability frame 336 indicates that AW 313 is extended to the next beacon, beacon 345. Accordingly, AP 350 remains in full power state 362 through the duration of AW 317. After AW 317, AP 350 can turn the data radio off. In some embodiments, AP radio state 355 transitions to radio off state 368. It is to be appreciated that example 330 shows one exemplary AP radio state 355. Other configurations of AP radio state 355 are possible. As an example, but not a limitation, AP 350 may transition to an LPR state after AW 317.

In some embodiments, AP 350 may limit a duration of a TXOP within AW 313 for an associated STA in order to promote fairness of channel access among STAs. For example, an associated station STA may be limited to a duration (e.g., 1 ms, 5 ms, etc.) of a TXOP. The limited duration of a TXOP information may be included in an information element(s) of beacon 340.

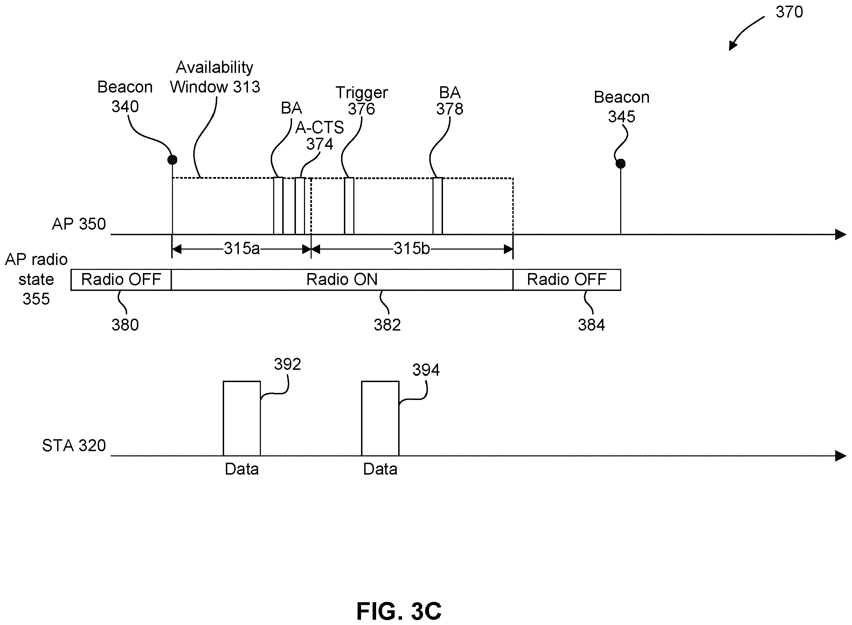

FIG. 3C illustrates example 370 of dynamic window AP power save enhancements without an auxiliary radio, according to some embodiments of the disclosure. For explanation purposes and not a limitation, FIG. 3C may be described with reference to elements from FIGS. 1 - 2B. For example, AP 350 may be any of the electronic devices: AP MLD 110, AP 112, AP 114, AP 116, or mobile AP STA 150 of system 100. AP 350 and STA 320 can be a system 200 of FIG. 2A. Example 370 provides details of power saving techniques when AP 350 is not equipped with an auxiliary radio. In some embodiments, AP 350 signals AW 313 in beacons 340 and 345. It is to be appreciated that while only two beacons 340 and 345 are illustrated in FIG. 3C, there may be more beacons in practice. AW 313 may begin after beacon 340 with duration 315a, which can be signaled in an information element in beacon 340. AP 350 is available within duration 315a of AW 313. For example, the data radio of AP 350 is on and available during the duration 315a of AW 313. STA 320 may send data 392 to AP 350 during duration 315a of AW 313.

In some embodiments, AP 350 may dynamically modify AW 313 by extending the duration (e.g., by duration 315b). In some embodiments, duration 315b may extend AW 313 until the transmission of the next beacon 345. AP 350 may transmit duration 315b to the associated STAs via a control frame. A control frame may be an unsolicited frame targeting one or more associated STAs. A control frame may also be an AP availability frame (for example, AP availability frame 318 of FIG. 3A). In example 370, the control frame is A-CTS 374. A-CTS 374 may be sent after completion of data 392. It is to be appreciated that other methods may be used by AP 350 to transmit information related to duration 315b to the associated STAs. AP 350 may send a Trigger frame 376 to STAs for data transmission. After AW 313 expires, AP 350 may transition to a power save state. In example 370, AP 350 does not have an auxiliary radio, in the power save state, AP 350 may turn off the data radio and enter into Radio Off 384 state. In some embodiments, AP 350 may enter into an LPR state by entering into a lower power operation mode (e.g., as shown in Table 1). In some embodiments, AP 350 may be receiving a TXOP even after AW 313 expires. AP 350 may choose to complete the transmission of the TXOP before transitioning to the power save state.

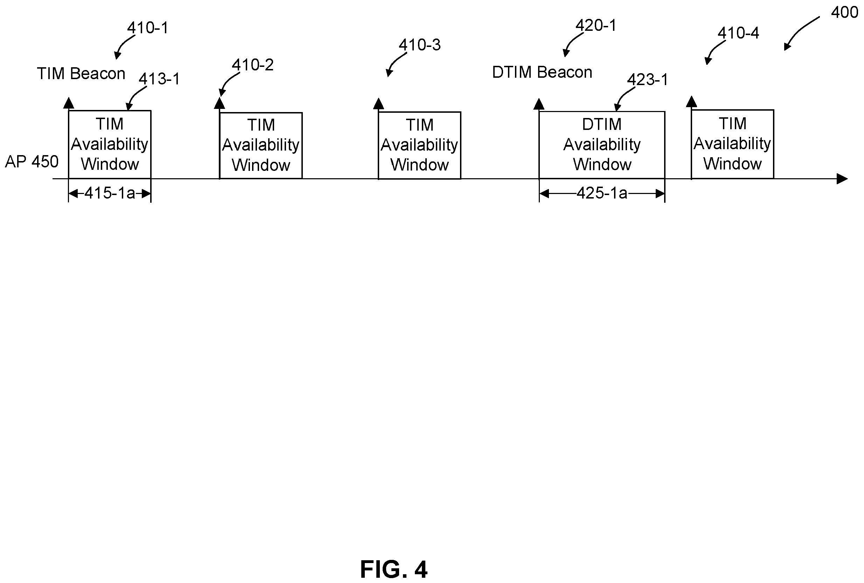

FIG. 4 illustrates example 400 of dynamic window AP power save enhancements using Traffic Indication Map (TIM) beacons and Delivery Traffic Indication Map (DTIM) beacons, according to some embodiments of the disclosure. For explanation purposes and not a limitation, FIG. 4 may be described with reference to elements from FIGS. 1 - 3C. For example, AP 450 may be any of the electronic devices: AP MLD 110, AP 112, AP 114, AP 116, or mobile AP STA 150 of system 100. AP 450 can be a system 200 of FIG. 2A and AP 450 can include a radio as shown in example 250 of FIG. 2B.

In some embodiments, AP 450 may include a TIM in every beacon and a DTIM in every Nth beacon. Here N is an integer greater than zero. For example, system 400 shows TIM beacons 401-1, 410-2, 410-3 and 410-4, and DTIM beacon 420-1. The exemplary system 400 shows that N = 4, or for every 4^{th} beacon, there is a DTIM beacon. It is to be appreciated that N may take other values. Each beacon can indicate an AW for AP 450. For example, TIM beacon 410-1 indicates a TIM AW 413-1 of AP 450 with duration 415-1a and DTIM beacon 420-1 may indicate DTIM AW 423-1 with duration 425-1a. AP 450 may transmit both buffered unicast data and buffered group addressed data in duration 425-1a of DTIM AW 423-1. AP 450 may transmit buffered unicast data during TIM AW 413-1. It is also possible that STAs associated with AP 450 wake up after DTIM beacons. Therefore, Duration 425-1a may be longer than duration 415-1a. TIM beacons 410-1, 410-2, 410-3, 410-4 and DTIM beacon 420-1 may be beacon 340 or beacon 345 of FIGS. 3A - 3C. Similarly, TIM AW 413-1 and DTIM AW 423-1 may be AW 313 of FIGS. 3A - 3C.

In some embodiments, AP 450 may be equipped with an auxiliary radio (e.g., auxiliary radio 215 of FIG. 2B). In some embodiments, AP 450 may operate in full power state in DTIM AWs, e.g., the data radio is turned on in DTIM AWs, and operate in LPR state outside of DTIM AWs, e.g., only the auxiliary radio is turned on outside of DTIM AWs. In some embodiments, AP 450 may operate in full power state in DTIM AWs, e.g., the data radio is turned on in DTIM AWs, and operate in LPR state in TIM AWs, e.g., only the auxiliary radio is turned on in TIM AWs. Outside DTIM AWs and TIM AWs, AP 450 may operate in a power save mode, e.g., both data radio and auxiliary radio are turned off, or the auxiliary radio is turned off and the data radio is operating in a low power mode. It is to be appreciated that the radio configurations described here are exemplary implementations; the description here does not preclude other implementations.

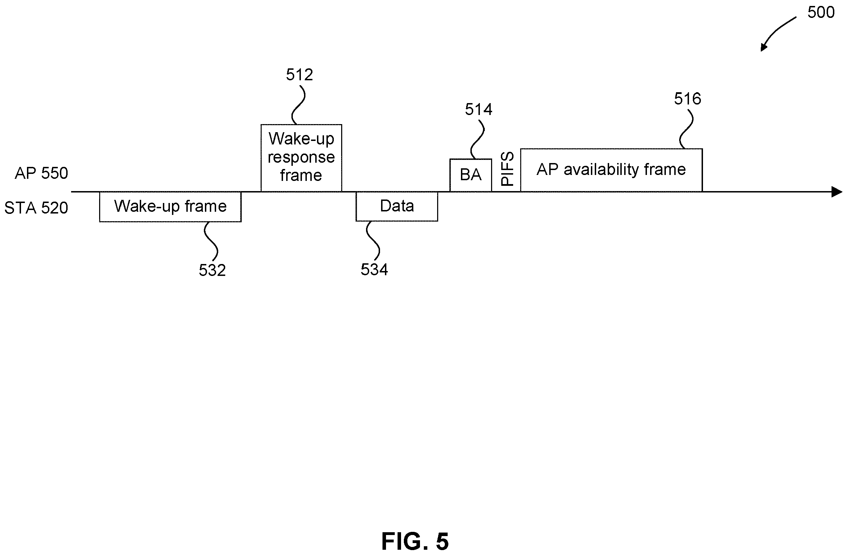

FIG. 5 illustrates example 500 of dynamic window AP power save enhancements including a wake-up response frame, according to some embodiments of the disclosure. For explanation purposes and not a limitation, FIG. 5 may be described with reference to elements from FIGS. 1 - 2B and/or FIG. 3B. For example, AP 550 may be any of the electronic devices: AP MLD 110, AP 112, AP 114, AP 116, or mobile AP STA 150 of system 100. STA 520 may be any of the electronic devices: non-AP MLD STA 120d, STA 122, STA 124, STA 126, STA 120a-120c, or mobile AP STA 150 of system 100. AP 550 and STA 520 can be a system 200 of FIG. 2A. AP 550 and STA 520 can include radios as shown in example 250 of FIG. 2B.

In some embodiments, AP 550 may be equipped with an auxiliary radio (e.g., auxiliary radio 215 of FIG. 2B). Example 500 may be performed by AP 350 in AW 313 of FIG. 3B. In example 500, AP 550 is in the LPR state. STA 520 sends wake-up frame 532 to AP 550 to activate AP 550's data radio. Since AP 550 is in the LPR state, AP 550 may receive low rate transmissions, for example, transmissions with bit rates up to 24Mb/s and with bandwidth up to 20MHz. Wake-up frame 532 can be configured to be a low rate transmission for AP 550 to receive.

In some embodiments, wake-up frame 532 may be an UL MU-RTS frame. Once AP 550 receives wake-up frame 532, AP 550 transitions to a full power state, e.g., turns on the data radio of AP 550 for full power (or higher power) transmitting and receiving. After AP 550 transitions to the full power state, AP 550 transmits Wake-up response frame 512. Wake-up response frame 512 may include information regarding AP 550's availability. For example, Wake-up response frame 512 signals that AP 550 is in a full power state with data radio turned on, e.g., for a certain period. Wake-up response frame 512 may also indicate a duration (e.g., an extension of an AW 313 of FIG. 3B) regarding the future availability of AP 550, where AP 550 is either in a full power state or in an LPR state, e.g., for a certain duration in the future. Wake-up response frame 512 may be configured to be received by STAs associated with AP 550. STAs that receive this information do not need to send wake-up frames again, e.g., since AP 550 is in a full power state.

In some embodiments, Wake-up frame 532 may be a data frame configured for a low rate and can be received by the auxiliary radio of AP 550. Wake-up frame 532 may also be an MU-PPDU that identifies AP 550 as a receiver in a PPDU preamble. In some embodiments, no bit rate limitation is needed. However, legacy devices may not support the MU-PPDU data frame. In either case, AP 550 may transition to a full power state, e.g., turn on the data radio for full power transmitting and receiving, and transmit Wake-up response frame 512. In some instances, Wake-up response frame 512 may be a unicast frame intended for STA 520. STA 520 transmits data 534 to AP 550 during a TXOP, and AP 550 transmits Block Ack (BA) 514. AP 550 follows a Point Coordination Function (PCF) Interframe Space (PIFS) rule, in which PIFS can equal SIFS+1 slot or 25 µs. After transmitting the BA and after a PIFS, AP 550 may transmit AP availability frame 516, including information regarding the availability of AP 550. For example, an indication that AP 550's data radio is turned on. AP availability frame 516 may also include information regarding further availability of AP 550. AP availability frame 516 may be a broadcast frame, therefore, one or more STAs associated with AP 550 can receive the AP availability information and do not send additional wake-up frames. In some aspects, AP availability frame 516 may be sent during AP 550's DL TXOP. It is to be appreciated that the description here does not preclude other implementations of Wake-up frame 532, Wake-up response frame 512, and AP availability frame 516.

In some embodiments, the auxiliary radio of AP 550 may be configured to both receive and transmit. Accordingly, the auxiliary radio of AP 550 may be configured to receive Wake-up frame 532 and transmit the Wake-up response frame 512 in response to receiving Wake-up frame 532.

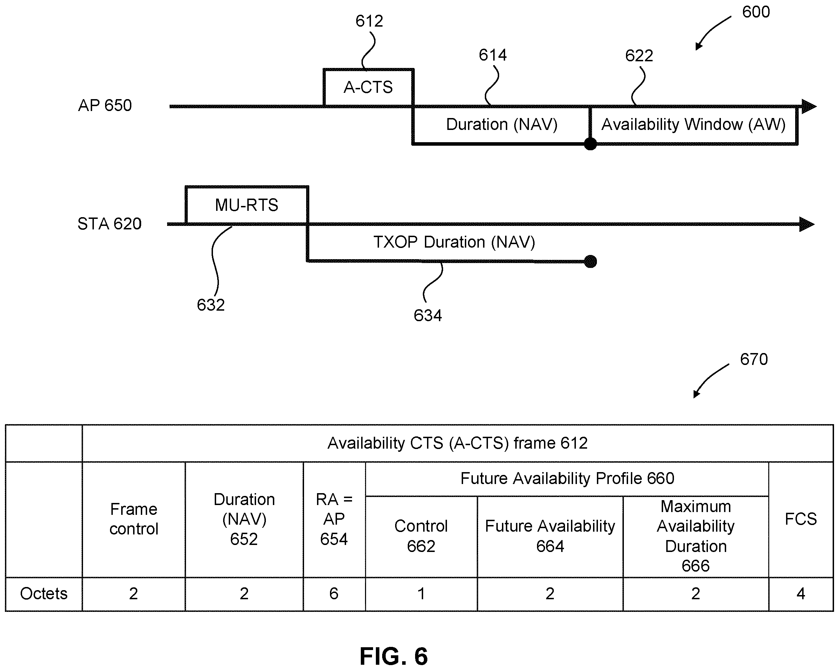

FIG. 6 illustrates examples 600 and 670 of dynamic window AP power save enhancements using an A-CTS frame, according to some embodiments of the disclosure. For explanation purposes and not a limitation, FIG. 6 may be described with reference to elements from FIGS. 1 - 2B. For example, AP 650 may be any of the electronic devices: AP MLD 110, AP 112, AP 114, AP 116, or mobile AP STA 150 of system 100. STA 620 may be any of the electronic devices: STA 120a-120c of system 100. AP 650 and STA 620 can be a system 200 of FIG. 2A and can have a radio of FIG 2B. According to some aspects, example 600 and 670 may be used to signal AP availability by example 500 of FIG. 5.

As shown in example 600, AP 650 may operate in an LPR state. STA 620 may send UL MU-RTS 632 to AP 650. In UL MU-RTS 632, STA 620 may specify a TXOP duration and initialize network allocation vector (NAV) 634 when starting TXOP with UL MU-RTS 632. After receiving UL MU-RTS 632, AP 650 transitions to a full power state, and responds with A-CTS frame 612. A-CTS frame 612 may include Duration (NAV) 614 within which AP 650 is available and remains in a full power state. A-CTS frame 612 may also specify Available Window (AW) 622 of AP 650. AW 622 may follow immediately after Duration (NAV) 614. In some embodiments, AW 622 may starts after a time offset (e.g., as described by example 670). During AW 622, AP 650 may enter into one of the future available states described in example 670. A-CTS 612 may be configured to be received by STAs associated with AP 650. Thus, STAs receiving A-CTS frame 612 may not send a UL MU-RTS frame to start a TXOP. MU-RTS 632 disclosed here may be used as wake-up frame 532 of FIG. 5, or Wake-up frame 332 of FIG. 3B.

Example 670 provides an exemplary frame structure for A-CTS frame 612. As an example and not a limitation, Duration (NAV) field 652 may specify the duration AP 650 stays in a full power state. Duration (NAV) field 652 value may be based on information in UL MU-RTS 632. Additionally or alternatively, Duration (NAV) field 652 value may be based on an AW duration indicated in a beacon by AP 650. A-CTS frame 612 may also include Future Availability Profile field 660, which may specify one or more parameters for future availability of AP 650. Future Availability Profile field 660 may include Control field 662, Future Availability field 664, and Maximum Availability Duration field 666. Control field 662 may define availability states of AP 650. As an example and not a limitation, Table 2 provides possible availability states indicated by Control field 662. Future Availability field 664 can specify the time offset after the NAV 652 has expired, when the future availability (e.g., when AW 622 begins) of AP 650 starts. The Maximum Availability Duration field 666 can specify the duration of the AP availability (e.g., the duration of Future Availability 622). AP 650 may set the Future Availability field 664 to 0 indicating that AP availability (e.g., AW 622) starts just after the NAV (e.g., just after Duration (NAV) 614). If AP 650 transmits an availability window in a beacon, Future Availability Profile field 660 may be used by A-CTS frame 612 to modify the AW of AP 650. In some examples, A-CTS frame 612 is configured to be received by all awake STAs associated with AP 650, this may be achieved by setting Receiver Address (RA) field 654 to be the address of AP 650.

**Table 2. AP Future Availability States**

| **Future Availability State** | **Description** |
|---|---|
| Available (Full power state) | AP 650 operates in a full power state |
| Auxiliary radio available ( LPR state) | AP 650 is available through auxiliary radio |
| Unavailable (Radio OFF) | AP 650 turns off both auxiliary radio and data radio. |

In some example, AP 650 may be available in the future through auxiliary radio, e.g., AP 650 is in an LPR state during future availability 664. In this case, a STA may still transmit a UL MU-RTS to transition AP 650 from LPR state to full power state during future availability 622. In some example, AP 650 may be available in the future with data radio on during future availability 622. In this case, AP 650 is in a full power state and other STAs may start TXOPs without sending UL MU-RTS. In some embodiments, A-CTS frame 612 may be used as Wake-up response frame 512 of FIG. 5. In some embodiments, A-CTS frame 612 may be used as AP availability frame 336 of FIG. 3B.

In some embodiments, the auxiliary radio of AP 650 may be configured to both receive and transmit, then the auxiliary radio of AP 650 may transmit the A-CTS frame.

In some embodiments, AP 650 (e.g., a mobile AP or a mobile AP STA) may have co-existence issues, or AP 650 may need to communicate in another network by using the WLAN radio (e.g., data radio 213). In these cases, AP 650 may signal that AP 650 is temporarily not available. If AP 650 schedules non-availability time in the future, AP 650 may be available between the time the Duration (NAV) 652 expires until the non-availability time (not shown) begins. STA 620 may try to communicate with AP 650 during this available time. An indication of the future non-availability time may help STAs associated with AP 650 to adjust STA transmissions and avoid transmissions to AP 650 during the time when AP 650 is not available. In some embodiments, AP 650 may signal that availability via an auxiliary radio (e.g., auxiliary radio 215). In this case, AP 650's ongoing transmissions at the time when the auxiliary radio availability starts can continue. New transmissions, however, may need to include a wake-up frame, for example MU-RTS, to ensure that AP 650 has a data radio available.

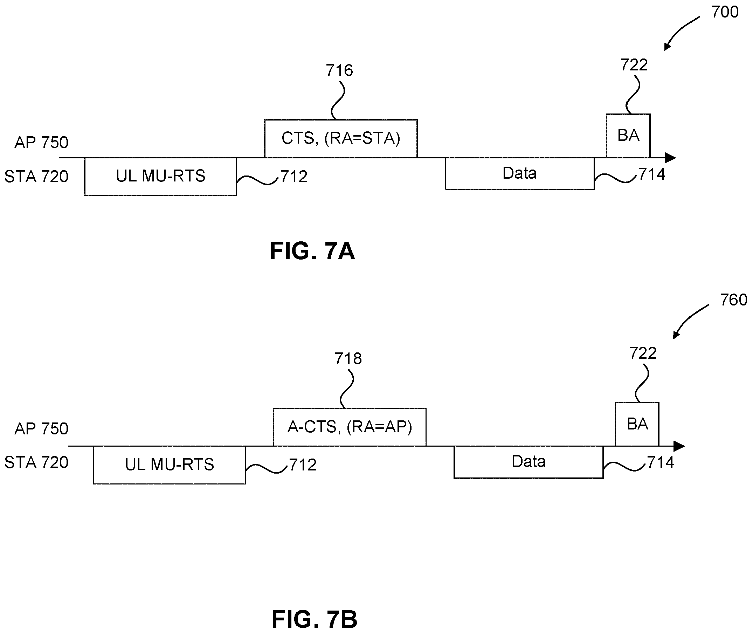

FIG. 7A illustrates example 700 of AP availability using a CTS frame, according to some embodiments of the disclosure. For explanation purposes and not a limitation, FIG. 7 may be described with reference to elements from FIG. 1 and/or FIGS 2A and 2B. For example, AP 750 may be any of the electronic devices: AP MLD 110, AP 112, AP 114, AP 116, or mobile AP STA 150 of system 100. STA 720 may be any of the electronic devices: STA 120a-120c of system 100. AP 750 and STA 720 can be a system 200 of FIG. 2A. AP 750 and STA 720 can include radios as shown in example 250 of FIG 2B.

Example 700 shows AP 750 transmitting CTS to respond to a wake-up frame. In example 700, STA 720 sends UL MU-RTS 712 to wake-up AP 750. AP 750 starts to transition to a full power state, and responds with CTS frame 716. In CTS frame 716, the receiver address field includes the address of STA 720. In this case, only STA 720 receives CTS frame 716. STA 720 may continue TXOP and transmit data 714. AP 750 transmit BA 722 after completing reception of data 714. AP 750 may stay in a full power state after transmission of BA 722. However, other STAs associated with AP 750 may not know that AP 750 is now in a full power state. If other STAs want to transmit data to AP 750, the other STAs transmit UL MU-RTS frames to try to wake-up AP 750, even though AP 750 is already awake (by STA 720).

FIG. 7B illustrates example 760 of dynamic window AP power save enhancements using A-CTS, according to some embodiments of the disclosure. For explanation purposes and not a limitation, FIG. 7B may be described with reference to elements from FIG. 1, and/or FIGS. 2A and 2B. For example, AP 750 may be any of the electronic devices: AP MLD 110, AP 112, AP 114, AP 116, or mobile AP STA 150 of system 100. STA 720 may be any of the electronic devices: STA 120a-120c of system 100. AP 750 and STA 720 can be a system 200 of FIG. 2A and can include radios as shown in example 250 of FIG 2B.

Example 750 illustrates AP power save techniques using A-CTS. In some embodiment, when STA 720 sends UL MU-RTS to wake-up AP 750. AP 750 starts to transition to a full power state, and responds with A-CTS frame 718. In A-CTS frame 718, receiver address field is set to be AP 750's address. In this case, all STAs associated with AP 750 and are awake may detect A-CTS frame 718. STA 720 continues TXOP and transmits data 714. AP 750 transmits BA 722 after completing reception of data 714. Afterwards, AP 750 can stay in a full power state for a certain period (for example, as defined by Duration (NAV) field 652 and Future Availability field 664 of FIG 6B). Since other STAs associated with AP 750 can receive A-CTS frame 718 and know AP 750 is in the full power state for a certain period, they do not need to send their own UL MU-RTS frames as long as they initiate a TXOP within the period that AP 750 stays in a full power state.

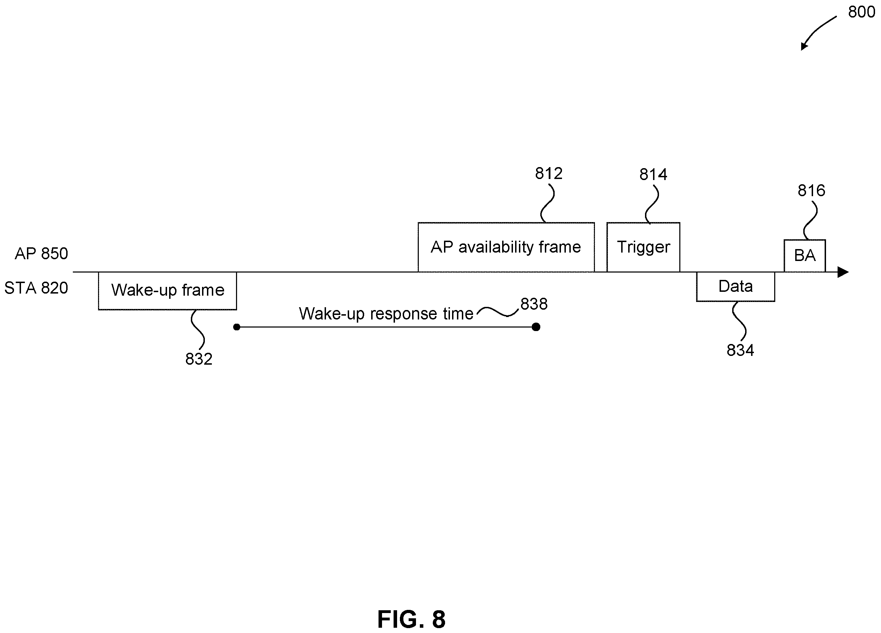

FIG. 8 illustrates example 800 of dynamic window AP power save enhancements including a wake-up response time, according to some embodiments of the disclosure. For explanation purposes and not a limitation, FIG. 8 may be described with reference to elements from FIGS. 1 - 2B and/or FIG. 3B. For example, AP 850 may be any of the electronic devices: AP MLD 110, AP 112, AP 114, AP 116, or mobile AP STA 150 of system 100. STA 820 may be any of the electronic devices: non-AP MLD STA 120d, STA 122, STA 124, STA 126, STA 120a-120c, or mobile AP STA 150 of system 100. AP 850 and STA 820 can be a system 200 of FIG. 2A. AP 850 and STA 820 can include radios as shown in example 250 of FIG. 2B.

In some embodiments, AP 850 may be equipped with an auxiliary radio (e.g., auxiliary radio 215 of FIG. 2B) and AP 850 is in an LPR state. Example 800 may be performed by AP 350 in AW 313 of FIG. 3B. In example 800, AP 850 transmits wake-up response time 838 in a beacon frame, or during association of STAs with AP 850. Wake-up response time 838 is the maximum time AP 850 needs to wake up the main data radio (for example, data radio 213 of FIG. 2B) plus additional surplus time to give tolerance for the cases when the channel is busy and AP 850 cannot send the AP availability frame. AP 850 may wake up before Wake-up response time 838 expires. In example 800, STA 820 sends wake-up frame 832 to AP 850 in order to activate AP 850's data radio. STA 820 may wait for wake-up response time 838 to expire. If AP 850 does not respond before the wake-up response time 838 expires, STA 820 may transmit the Wake-up frame 832 again. In some embodiments, AP 850 may turn on the data radio and transition to a full power mode before wake-up response time 838 expires. Subsequently, AP 850 may transmit AP availability frame 812 to STAs associated with AP 850. AP availability frame 812 may be a broadcast frame. AP availability frame 812 may broadcast AP 850's availability to STAs associated with AP 850. For example, AP availability frame 812 may signal that AP 850 is in a full power state and ready for full transmission BW, NSS, etc. for a certain period. AP availability frame 812 may also include a duration regarding future availability of AP 850, where AP 850 is either in a full power state or in an LPR state for the duration in the future. The duration may also be used to modify AW of AP 850.

In some embodiments, the auxiliary radio of AP 850 may be configured to both receive and transmit. Accordingly, the auxiliary radio of AP 850 may receive Wake-up frame 832 and transmit the AP availability frame 812 in response to receiving Wake-up frame 832.

In some embodiments, following the transmission of AP availability frame 812, AP 850 may send a Trigger frame 814 to STA 820 to solicit uplink transmission. Trigger frame 814 may be a basic-variant Trigger frame, resource allocation frame, a DL MU-RTS TXOP sharing, or reverse direction grant. Subsequently, STA 820 may transmit data 834. It is to be appreciated that example 800 in FIG. 8 is an example and is not limiting. For example, Trigger frame 814 may not be needed. STA 820 may initiate data transmission to transmit data 834 after receiving AP availability frame 812. And Trigger frame 814 may be sent from AP 850 to other STAs to solicit uplink transmissions from other STAs.

In some embodiments, wake-up frame 832 may be an uplink UL MU-RTS frame, or a data frame or a MU-PPDU frame. Since AP 850 is in the LPR state when STA 820 transmits wake-up frame 832, AP 850 may receive low rate transmissions, for example, for transmissions with bit rates up to 24Mb/s and with bandwidth up to 20MHz. Wake-up frame 832 may be configured to low rate transmissions. For example, if wake-up frame 832 is a data frame, the corresponding bit rates and bandwidth may be limited. If wake-up frame 832 is a MU-PPDU data frame, the corresponding preamble may identify AP as receiver and no bit rate limitation is needed. However, legacy devices do not support MU-PPDU data frame.

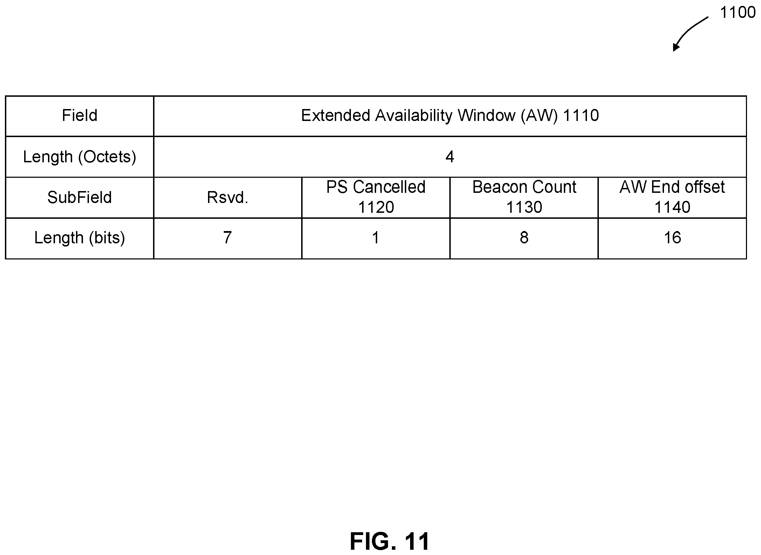

FIG. 11 illustrates an example 1100 of a broadcast availability frame for dynamic window AP power save enhancements, according to some embodiments of the disclosure. As an example and not a limitation, example 1100 of the broadcast availability frame may be AP availability frame 318 of FIG. 3A, AP availability frame 516 of FIG. 5, or AP availability frame 812 of FIG. 8. In some embodiments, Extended AW field 1110 may include Power Save (PS) Cancelled field 1120, Beacon Count field 1130, and AW End offset field 1140. As an example, PS Cancelled field 1130 (e.g., value = 1) indicates that an AP is immediately terminating power save mode, transitioning to the full power state for time durations described using Beacon Count field 1130 and AW Offset field 1140.. As an example, AW End offset field 1140 indicates that an AP is extending an AW by the value of AW End offset field 1140. In some embodiments, Beacon Count field 1130 (e.g., value = 0) can indicate that a STA may use the AW End offset field 1140 to extend an AW. In some embodiments, Beacon Count field 1130 can indicate that an AP may be available for the next M beacons, where M is an integer, and M equals the value as indicated by Beacon Count field 1130. For example, the value of M can be between 1 and 254 (inclusive). In some embodiments, Beacon Count field 1130 (e.g., value = 255) can indicate that an AP is disabling a power save mode for a period of time until the power save mode is enabled again. For example, the AP may re-enable the power save mode by advertising in a subsequent beacon starting at a DTIM boundary (e.g., DTIM beacon 420-1 of FIG. 4).

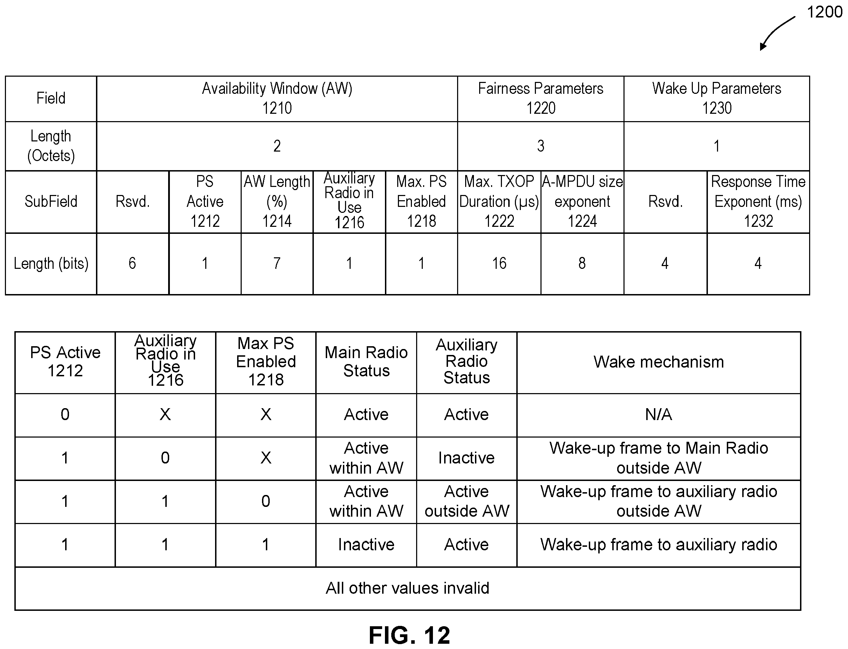

FIG. 12 illustrates an example 1200 of an information element for dynamic window AP power save enhancements, according to some embodiments of the disclosure. Example 1200 may be signaled in beacons transmitted by APs equipped with an auxiliary radio, (e.g., auxiliary radio 215 of FIG. 2B). For example, in beacon 340 transmitted by AP 350 in FIG. 3B, beacon 940 transmitted by AP 950 in FIG. 9, as well as beacon 1040 transmitted by AP 1050 in FIGS. 10A and 10B. As an example and not a limitation, AW field 1210 can signal AW parameters to associated STAs. Fairness Parameters field 1220 can signal fairness configurations of transmitting STA. Wake Up Parameters field 1230 can signal the amount of time that an AP needs to wake up a data radio (e.g., wake-up response time 838 in FIG. 8).

In some embodiments, AW field 1210 can include PS Active field 1212, AW Length field 1214, Auxiliary Radio in Use field 1216, and Max PS Enabled field 1218. Fairness Parameters field 1220 can include Max TXOP Duration field 1222 and A-MPDU size exponent field 1224. Max TXOP Duration field 1222 may be used to limit duration of STA's TXOP within AW and A-MPDU Size Exponent field 1224 may be used to limit maximum size of a PPDU that may be transmitted within AW. Wake Up Parameters field 1230 can include Response Time Exponent field 1232. In some embodiments, an AP may not signal AW field 1210 and Wake Up Parameters field 1230 in beacon. Accordingly, the AP may operate with a data radio on for the whole beacon period. In some embodiments, an AP may indicate in a beacon that STAs may send a data frame to an auxiliary radio at a low MCS rate. In examples described below, AP's main radio can be the data radio 213 of FIG. 2B.

As an example, PS Active field 1212 value = 0 indicates that power save mode is off. Thus, a data radio of the AP (e.g., the main radio) is on and in full power so no wake up mechanism is needed.

As an example, PS Active field 1212 value = 1, and auxiliary radio in use field 1216 value = 0 indicates that the AP's main radio is on and in full power within AW, while the auxiliary radio is inactive. AP's main radio can be in an LPR state outside AW, e.g., operating in a low power mode. A wake-up frame sent to the main radio outside AW may wake up AP's main radio to operate in full power mode (e.g., FIGS. 3A, 3B, 3C).

As an example, PS Active field 1212 value = 1, Auxiliary Radio in Use field 1216 value = 1 and Max PS Enabled field 1218 value = 0 indicates AP's main radio is on and in full power within AW, the auxiliary radio is active outside AW, and a wake-up frame sent to the auxiliary radio outside AW may wake up AP's main radio.

As another example, PS Active field 1212 value = 1, Auxiliary Radio in Use field 1216 value = 1, and Max PS Enabled field 1218 value = 1 indicates AP's main radio is inactive and auxiliary radio is active. Thus, a wake-up frame sent to the auxiliary radio may wake up AP's main radio (e.g., FIGS. 9, 10A, 10B).

In some embodiment, an AP may indicate in a beacon that STAs may send a data frame to an auxiliary radio (e.g., auxiliary radio 215 of FIG. 2B) at a low MCS rate.

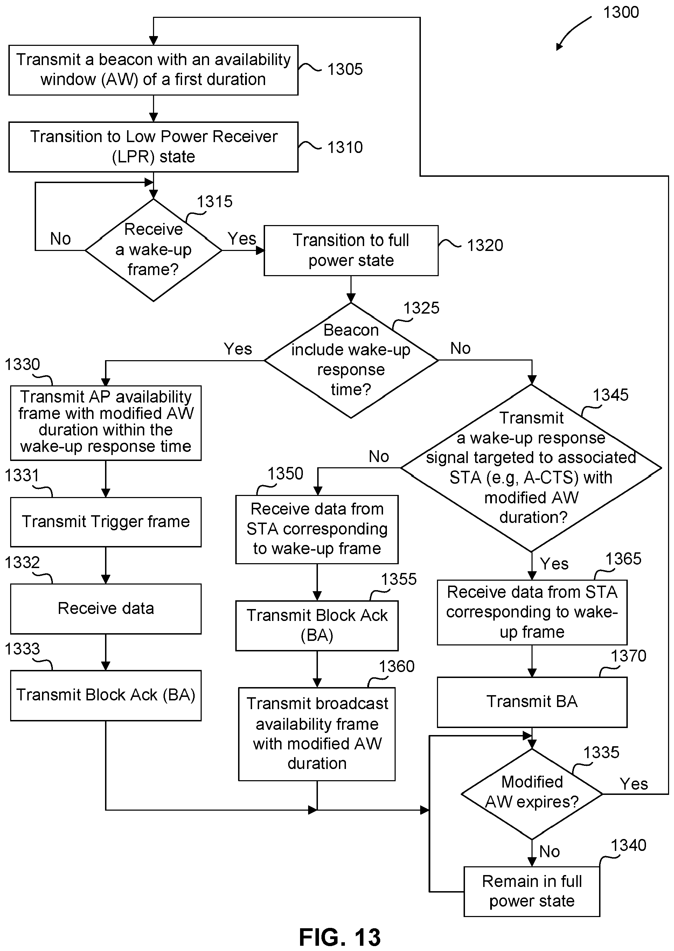

FIG. 13 illustrates method 1300 for dynamic window AP power save enhancements, according to some embodiments of the disclosure. For explanation purposes and not a limitation, method 1300 may be described with reference to elements from FIGS. 1 - 2B. For example, method 1300 may be performed by an AP including but not limited to AP MLD 110, AP 112, AP 114, AP 116, or mobile AP STA 150 of system 100. The AP may communicate with a STA that may be any of the electronic devices: non-AP MLD STA 120d, STA 122, STA 124, STA 126, STA 120a-120c, or mobile AP STA 150. The AP and/or STA can be a system 200 of FIG. 2A and can include radios as shown in example 250 of FIG. 2B. Method 1300 is not limited to the specific aspects illustrated in FIG. 13 and other systems may be used to perform the method as well be understood by those skilled in the art. It is to be appreciated that not all operations may be needed, or additional operations may be needed, and the operations may not be performed in the same order as shown in FIG. 13.

At 1305, the AP transmits AW information via a beacon (e.g., beacon 340 of FIG. 3B). The beacon may include a first duration of the AW. For example, the beacon may include an information element as shown in example 1200 of FIG. 12. In some embodiments, the beacon may be one of the beacons as shown in FIGS. 3A, 3B, 9, 10A, 10B. The beacon may be TIM beacon 410-1 of FIG. 4, or DTIM beacon 420-1 of FIG. 4. Method 1300 proceeds to 1310.

At 1310, the AP can transition to an LPR state (e.g., when the AP includes an auxiliary radio and the AP is configured to operate in an LPR state during an AW). Examples can include LPR state 360 of FIG. 3B, LPR state 962 of FIG. 9, LPR state 1060 of FIG. 10A, or LPR state 1072 of FIG. 10B.

At 1315, the AP makes a determination if a wake-up frame is received. The wake-up frame may be Wake-up frame 332 of FIG. 3B, Wake-up frame 532 of FIG. 5, or Wake-up frame 832 of FIG. 8. In some embodiments, the wake-up frame may be an MU-RTS frame (e.g., UL MU-RTS 712 of FIG 7B, MU-RTS 922 of FIG. 9, MU-RTS 1022 and 1026 FIGS. 10A-10B), a data frame with a low transmission rate, or an MU-PPDU. If no wake-up frame is received, the AP stays in the LPR state and continues checking if a wake-up frame is received. Otherwise, method 1300 proceeds to 1320.

At 1320, the AP can transition the transceiver to a full power state (e.g., full power state 362 of FIG. 3B, full power state 964 of FIG. 9, full power state 1062 of FIG. 10A, or full power state 1074 of FIG. 10B).

At 1325, the AP makes a determination if the beacon includes a wake-up response time (e.g., Wake-up response time 838 of FIG. 8). The wake-up response time may be included in an information element of transmitted beacon, for example, Wake Up Parameters field 1230 of example 1200 as shown in FIG. 12. If the beacon includes a wake-up response time, method 1300 proceeds to 1330, otherwise, method 1300 proceeds to 1345.

At 1330, the AP may transmit an AP availability frame (e.g., AP availability frame 332 of FIG. 3B, or AP availability frame 812 of FIG. 8) within the wake-up response time. The AP availability frame may modify the AW duration. For example, the AP availability frame may be a broadcast availability frame with frame structure as shown in example 1100 of FIG 11 and AW duration may be modified by AW End offset field 1140 of FIG. 11. In some embodiments, the AP availability frame may also cancel the AW. For example, using the AW Cancelled field 1130 of example 1100 as shown in FIG. 11. In some embodiments, the AP may transmit an AP availability frame outside the wake-up response time, in this case, the STA corresponding to the wake-up frame may re-transmit the wake-up frame. Method 1300 proceeds to 1331.

At 1331, the AP may send a trigger frame (e.g., Trigger frame 814 of FIG. 8) to solicit uplink transmission. The trigger frame may be a resource allocation frame, a DL MU-RTS TXOP sharing, or reverse direction grant. The trigger frame may be sent to the STA corresponding to the wake-up frame. In some embodiments, a trigger frame may be sent to other STAs associated with the AP.

At 1332, the AP receives data from STA corresponding to the wake-up frame. For example, AP 850 receives data 834 from STA 820 as shown in example 800 of FIG. 8.

At 1333, the AP transmits a BA (e.g., BA 816 of FIG. 8) and method 1300 proceeds to 1335.

At 1335, the AP makes a determination if modified AW expires. If it is determined that modified AW has expired, the AP may wait until the next beacon transmission time and start the method again at 1305. The AP may turn off data radio during this time, or may transition to LPR state until the transmission of the next beacon (e.g., LPR state 968 of FIG. 9). In some embodiments, AP may remain in the full power state (e.g., Full power state 362 of FIG. 3B or full power state 1074 of FIG. 10B). If it is determined that modified AW has not expired, method 1300 proceeds to 1340.

At 1340, the AP may remain in full power state. For example, full power state 362 of FIG. 3B, or full power state 964 of FIG. 9. In some embodiments, the AP may transition to an LPR state within an AW, for example, LPR state 1064 of FIG. 10A. In some embodiments, the AP stays in full power state until the next beacon transmission time, for example, full power state 1074 of FIG. 10B.

At 1345, the AP may transmit a wake-up response signal (e.g., Wake-up response frame 512 of FIG. 5, A-CTS 612 of FIG. 6). The wake-up response signal may be configured to be received by STAs associated with the AP and the wake-up response signal may indicate a modification of the AW duration (e.g., via Future Availability Profile field 660 in FIG. 6). In some embodiments, the wake-up response signal may be a unicast frame targeting the STA corresponding to the wake-up frame (e.g., CTS 1052 of FIGS. 10A and 10B). If the wake-up response signal is an A-CTS frame (e.g., A-CTS 612 of FIG. 6), method 1300 proceeds to 1365. If the wake-up response signal is a unicast frame targeting the STA corresponding to the wake-up frame (e.g., CTS 1052 of FIGS. 10A and 10B), method 1300 proceeds to 1350.

At 1350, the AP receives data (e.g., data 534 of FIG. 5, data 1024 of FIG. 10A, or data 1024a of FIG. 10B) from the STA corresponding to the wake-up frame.

At 1355, the AP transmits a BA (e.g., BA 514 of FIG. 5, BA 1054 of FIG. 10A, or BA 1054a of FIG. 10B).

At 1360, the AP may transmit an AP availability frame (e.g., AP availability frame 516 of FIG. 5). The AP availability frame indicating a modification of the AW duration. For example, the AP availability frame may be a broadcast availability frame with frame structure as shown in example 1100 of FIG 11 and AW duration may be modified by AW End offset field 1140 of FIG. 11. In some embodiments, the AP availability frame may also cancel the AW. For example, using the AW Cancelled field 1130 of example 1100 as shown in FIG. 11. Method 1300 returns to 1335.

At 1365, the AP receives data (e.g., data 714 of FIG. 7B, or data 924 and 926 of FIG. 9) from STA corresponding to the wake-up frame.

At 1370, the AP transmits a BA (e.g., BA 722 of FIG. 7B). Method 1300 returns to 1335.

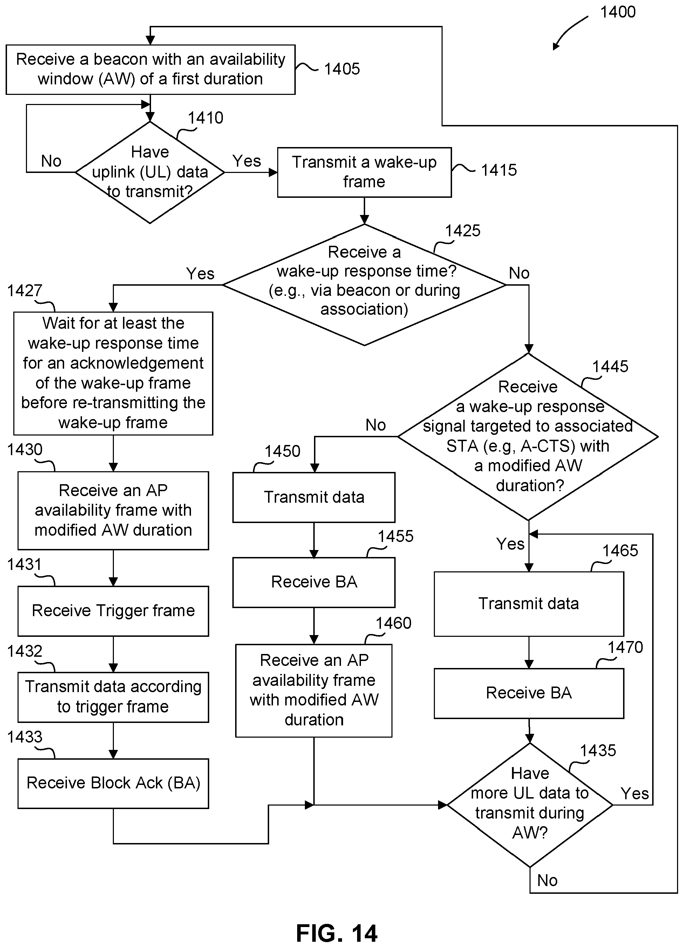

FIG. 14 illustrates method 1400 for a STA communicating with an AP using dynamic window AP power save enhancements, according to some embodiments of the disclosure. For explanation purposes and not a limitation, method 1400 may be described with reference to elements from FIGS. 1 - 2B. For example, method 1400 may be performed by an AP including but not limited to AP MLD 110, AP 112, AP 114, AP 116, or mobile AP STA 150 of system 100. The AP may communicate with a STA that may be any of the electronic devices: non-AP MLD STA 120d, STA 122, STA 124, STA 126, STA 120a-120c, or mobile AP STA 150. The AP and/or STA can be a system 200 of FIG. 2A and can include radios as shown in example 250 of FIG. 2B. Method 1400 is not limited to the specific aspects illustrated in FIG. 14 and other systems may be used to perform the method as well be understood by those skilled in the art. It is to be appreciated that not all operations may be needed, or additional operations may be needed, and the operations may not be performed in the same order as shown in FIG. 14.

At 1405, the STA receives AW information via a beacon (e.g., beacon 340 of FIG. 3B). The beacon may include a first duration of the AW. For example, the beacon may include an information element as shown in example 1200 of FIG. 12. In some embodiments, the beacon may be one of the beacons as shown in FIGS. 3A, 3B, 9, 10A, 10B. The beacon may be TIM beacon 410-1 of FIG. 4, or DTIM beacon 420-1 of FIG. 4. Method 1400 proceeds to 1410.

At 1410, the STA makes a determination if there is data to be transmitted. If the STA has no data to transmit, the STA continues the checking. If the STA has data to transit, method 1400 proceeds to 1415.

At 1415, the STA transmits a wake-up frame. The wake-up frame may be Wake-up frame 332 of FIG. 3B, Wake-up frame 532 of FIG. 5, or Wake-up frame 832 of FIG. 8. In some embodiments, the wake-up frame may be an MU-RTS frame (e.g., UL MU-RTS 712 of FIG 7B, MU-RTS 922 of FIG. 9, MU-RTS 1022 and 1026 FIGS. 10A-10B), a data frame with a low transmission rate, or an MU-PPDU. Method 1400 proceeds to 1425.

At 1425, the STA checks if the beacon includes a wake-up response time (e.g., Wake-up response time 838 of FIG. 8). The wake-up response time may be included in an information element of transmitted beacon, for example, Wake Up Parameters field 1230 of example 1200 as shown in FIG. 12. If the beacon includes a wake-up response time, method 1400 proceeds to 1427, otherwise, method 1400 proceeds to 1445.

At 1427, the STA waits for at least the wake-up response time for an acknowledgement of the wake-up frame before re-transmitting the wake-up frame. Method 1400 proceeds to 1430.

At 1430, the STA may receive an AP availability frame (e.g., AP availability frame 332 of FIG. 3B, or AP availability frame 812 of FIG. 8) within the wake-up response time. The AP availability frame may modify the AW duration. For example, the AP availability frame may be a broadcast availability frame with frame structure as shown in example 1100 of FIG 11 and AW duration may be modified by AW End offset field 1140 of FIG. 11. In some embodiments, the AP availability frame may also cancel the AW. For example, using the AW Cancelled field 1130 of example 1100 as shown in FIG. 11. Method 1400 proceeds to 1431.

At 1431, the STA may receive a trigger frame (e.g., Trigger frame 814 of FIG. 8) sent by the AP to solicit uplink transmission. The trigger frame may be a resource allocation frame, a DL MU-RTS TXOP sharing, or reverse direction grant. The trigger frame may be targeting the STA. In some embodiments, a trigger frame may be sent to other STAs associated with the AP.

At 1432, the STA transmits data to the AP. For example, STA 820 transmits data 834 to AP 850 as shown in example 800 of FIG. 8.

At 1433, the STA receives a BA (e.g., BA 816 of FIG. 8) and method 1400 proceeds to 1435.

At 1435, the STA makes a determination if there is more UL data to transmit during the AW. If there is no more data to transmit, the STA waits until receiving the next beacon. If there is still more data to transmit, the STA may transmit the data, for example, proceeds to 1465.

At 1445, the STA may receive a wake-up response signal (e.g., Wake-up response frame 512 of FIG. 5, or e.g., A-CTS 612 of FIG. 6). The wake-up response signal may be configured to be received by STAs associated with the AP and the wake-up response signal may indicate a modification of the AW duration (e.g., via Future Availability Profile field 660 in FIG. 6). In some embodiments, the wake-up response signal may be a unicast frame targeting the STA (e.g., CTS 1052 of FIGS. 10A and 10B). If the wake-up response signal is an A-CTS frame ((e.g., A-CTS 612 of FIG. 6,) method 1400 proceeds to 1465. If the wake-up response signal is a unicast frame targeting the STA (e.g., CTS 1052 of FIGS. 10A and 10B), method 1400 proceeds to 1450.

At 1450, the STA transmits data (e.g., data 534 of FIG. 5, data 1024 of FIG. 10A, or data 1024a of FIG. 10B).

At 1455, the STA receives a BA (e.g., BA 514 of FIG. 5, BA 1054 of FIG. 10A, or BA 1054a of FIG. 10B).

At 1460, the STA may receive an AP availability frame (e.g., AP availability frame 516 of FIG. 5). The AP availability frame may indicate a modification of the AW duration. For example, the AP availability frame may be a broadcast availability frame with frame structure as shown in example 1100 of FIG 11 and AW duration may be modified by AW End offset field 1140 of FIG. 11. In some embodiments, the AP availability frame may also cancel the AW. For example, using the AW Cancelled field 1130 of example 1100 as shown in FIG. 11. Method 1400 returns to 1435.

At 1465, the STA transmits data (e.g., data 714 of FIG. 7B, or data 924 and 926 of FIG. 9).

At 1470, the STA receives a BA (e.g., BA 722 of FIG. 7B). Method 1400 returns to 1435.

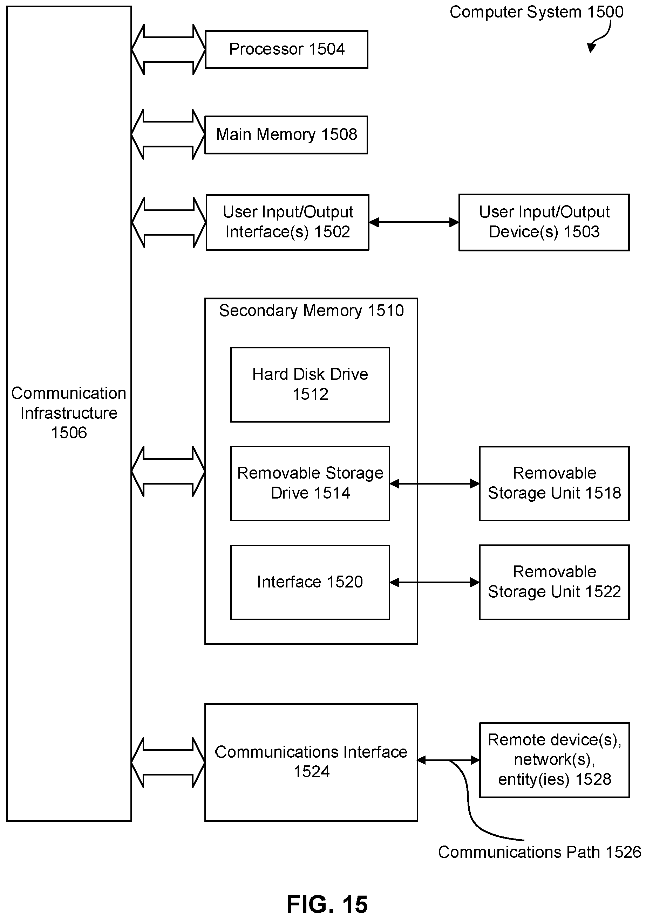

Various embodiments can be implemented, for example, using one or more well-known computer systems, such as computer system 1500 shown in FIG. 15. Computer system 1500 can be any well-known computer capable of performing the functions described herein. For example, and without limitation: AP MLD 110, AP 112, AP 114, AP 116, mobile AP STA 150, non-AP MLD STA 120d, STA 122, STA 124, STA 126, or STA 120a-120c of FIG. 1, system 200 of FIG. 2A, electronic devices of FIGS. 2B, 3A, 3B, 3C, 4, 5, 6, 7A, 7B, 8, 9, 10A, 10B (and/or other apparatuses and/or components shown in the figures) may be implemented using computer system 1500, or portions thereof.

Computer system 1500 includes one or more processors (also called central processing units, or CPUs), such as a processor 1504. Processor 1504 is connected to a communication infrastructure 1506 that can be a bus. One or more processors 1504 may each be a graphics processing unit (GPU). In an embodiment, a GPU is a processor that is a specialized electronic circuit designed to process mathematically intensive applications. The GPU may have a parallel structure that is efficient for parallel processing of large blocks of data, such as mathematically intensive data common to computer graphics applications, images, videos, etc.

Computer system 1500 also includes user input/output device(s) 1503, such as monitors, keyboards, pointing devices, etc., that communicate with communication infrastructure 1506 through user input/output interface(s) 1502. Computer system 1500 also includes a main or primary memory 1508, such as random access memory (RAM). Main memory 1508 may include one or more levels of cache. Main memory 1508 has stored therein control logic (e.g., computer software) and/or data.

Computer system 1500 may also include one or more secondary storage devices or memory 1510. Secondary memory 1510 may include, for example, a hard disk drive 1512 and/or a removable storage device or drive 1514. Removable storage drive 1514 may be a floppy disk drive, a magnetic tape drive, a compact disk drive, an optical storage device, tape backup device, and/or any other storage device/drive.

Removable storage drive 1514 may interact with a removable storage unit 1518. Removable storage unit 1518 includes a computer usable or readable storage device having stored thereon computer software (control logic) and/or data. Removable storage unit 1518 may be a floppy disk, magnetic tape, compact disk, DVD, optical storage disk, and/ any other computer data storage device. Removable storage drive 1514 reads from and/or writes to removable storage unit 1518 in a well-known manner.

According to some embodiments, secondary memory 1510 may include other means, instrumentalities or other approaches for allowing computer programs and/or other instructions and/or data to be accessed by computer system 1500. Such means, instrumentalities or other approaches may include, for example, a removable storage unit 1522 and an interface 1520. Examples of the removable storage unit 1522 and the interface 1520 may include a program cartridge and cartridge interface (such as that found in video game devices), a removable memory chip (such as an EPROM or PROM) and associated socket, a memory stick and USB port, a memory card and associated memory card slot, and/or any other removable storage unit and associated interface.

Computer system 1500 may further include a communication or network interface 1524. Communication interface 1524 enables computer system 1500 to communicate and interact with any combination of remote devices, remote networks, remote entities, etc. (individually and collectively referenced by reference number 1528). For example, communication interface 1524 may allow computer system 1500 to communicate with remote devices 1528 over communications path 1526, which may be wired and/or wireless, and which may include any combination of LANs, WANs, the Internet, etc. Control logic and/or data may be transmitted to and from computer system 1500 via communication path 1526.

The operations in the preceding embodiments can be implemented in a wide variety of configurations and architectures. Therefore, some or all of the operations in the preceding embodiments may be performed in hardware, in software or both. In some embodiments, a tangible, non-transitory apparatus or article of manufacture includes a tangible, non-transitory computer useable or readable medium having control logic (software) stored thereon is also referred to herein as a computer program product or program storage device. This includes, but is not limited to, computer system 1500, main memory 1508, secondary memory 1510 and removable storage units 1518 and 1522, as well as tangible articles of manufacture embodying any combination of the foregoing. Such control logic, when executed by one or more data processing devices (such as computer system 1500), causes such data processing devices to operate as described herein.

Based on the teachings contained in this disclosure, it will be apparent to persons skilled in the relevant art(s) how to make and use embodiments of the disclosure using data processing devices, computer systems and/or computer architectures other than that shown in FIG. 15. In particular, embodiments may operate with software, hardware, and/or operating system implementations other than those described herein.

It is to be appreciated that the Detailed Description section, and not the Summary and Abstract sections, is intended to be used to interpret the claims. The Summary and Abstract sections may set forth one or more but not all exemplary embodiments of the disclosure as contemplated by the inventor(s), and thus, are not intended to limit the disclosure or the appended claims in any way.

While the disclosure has been described herein with reference to exemplary embodiments for exemplary fields and applications, it should be understood that the disclosure is not limited thereto. Other embodiments and modifications thereto are possible, and are within the scope and spirit of the disclosure. For example, and without limiting the generality of this paragraph, embodiments are not limited to the software, hardware, firmware, and/or entities illustrated in the figures and/or described herein. Further, embodiments (whether or not explicitly described herein) have significant utility to fields and applications beyond the examples described herein.

Embodiments have been described herein with the aid of functional building blocks illustrating the implementation of specified functions and relationships thereof. The boundaries of these functional building blocks have been arbitrarily defined herein for the convenience of the description. Alternate boundaries can be defined as long as the specified functions and relationships (or equivalents thereof) are appropriately performed. In addition, alternative embodiments may perform functional blocks, steps, operations, methods, etc. using orderings different from those described herein.

References herein to "one embodiment," "an embodiment," "an example embodiment," or similar phrases, indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it would be within the knowledge of persons skilled in the relevant art(s) to incorporate such feature, structure, or characteristic into other embodiments whether or not explicitly mentioned or described herein.

The breadth and scope of the disclosure should not be limited by any of the above-described exemplary embodiments, but should be defined only in accordance with the following claims and their equivalents.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users, and should be updated as the collection and/or use of data changes. Personal information from users should be collected for legitimate and reasonable uses of the entity and not shared or sold outside of those legitimate uses. Further, such collection/sharing should only occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of, or access to, certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Exemplary embodiments of the present disclosure are set out in the following items:
1. An access point (AP) comprising:
   a transceiver; and
   a processor coupled to the transceiver, configured to:
      transmit, via the transceiver, a beacon indicating an availability window having a first duration;
      receive, via the transceiver, first data within the first duration;
      modify, during the first duration, the availability window by extending the first duration by a second duration; and
      transition the transceiver to a power save state after the availability window expires.
2. The AP of item 1, wherein the second duration extends the availability window until a next beacon transmission time.
3. The AP of any of items 1-2, wherein the processor is further configured to modify the availability window by extending the availability window for a third duration.
4. The AP of any of items 1-3, wherein the beacon is a Traffic Indication Map (TIM) beacon or a Delivery Traffic Indication Map (DTIM) beacon, wherein the first duration of the availability window corresponding to the TIM beacon is shorter than the first duration of the availability window corresponding to the DTIM beacon.
5. The AP of any of items 1-4, wherein the processor is further configured to:
   receive, via the transceiver operating in a low power receive (LPR) state, a wake-up frame within the first duration, wherein the wake-up frame is one of an uplink (UL) Multi-user (MU)-Request to Send (RTS) frame or a data frame; and
   transition the transceiver to a full power state responsive to receiving the wake-up frame.
6. The AP of item 5, wherein the processor is further configured to:
   transmit a wake-up response frame responsive to receiving the wake-up frame; and
   receive second data via the transceiver operating in the full power state.
7. The AP of item 6, wherein the wake-up response frame comprises the second duration of the availability window, and wherein the wake-up response frame is configured to be received by a STA associated with the AP.
8. The AP of any of items 6-7, wherein the wake-up response frame comprises an Availability Clear To Send (A-CTS) frame and wherein a Receiver Address (RA) field of the A-CTS frame comprises an address of the AP.
9. The AP of any of items 5-8, wherein the beacon comprises a wake-up response time, and the processor is further configured to:
   initiate transmission of an AP availability frame within the wake-up response time, wherein the AP availability frame comprises the second duration and indicates availability of the AP to an associated STA during the second duration, wherein the transition of the transceiver to the full power state occurs within the wake-up response time; and
   receive second data via the transceiver while operating in the full power state.
10. The AP of item 9, wherein the processor is further configured to:
   transmit, subsequent to the AP availability frame, a trigger frame to a STA associated with the wake-up frame.
11. A station (STA) comprising:
   a transceiver; and
   a processor coupled to the transceiver, configured to:
   receive a beacon indicating an availability window having a first duration;
   transmit first data within the first duration; and
   receive, during the first duration, an Access Point (AP) availability frame indicating a second duration modifying the availability window.
12. The STA of item 11, wherein the processor is further configured to:
   transmit, via the transceiver, a wake-up frame during the availability window, wherein the wake-up frame is one of an uplink (UL) multi-user (MU)-Request to Send (RTS) frame or a data frame.
13. The STA of item 12, wherein the processor is further configured to:
   receive a wake-up response frame, wherein the wake-up response frame comprises the second duration of the availability window, and wherein the wake-up response frame is configured to be received by a STA associated with the AP; and
   transmit second data via the transceiver.
14. The STA of any of items 12-13, wherein the wake-up response frame comprises an Availability Clear To Send (A-CTS) frame and wherein a Receiver Address (RA) field of the A-CTS frame comprises an address of the AP.
15. The STA of any of items 12-14, wherein the beacon frame comprises a wake-up response time, and the process is further configured to:
   receive the AP availability frame within the wake-up response time, wherein the AP availability frame comprises the second duration and indicates availability of the AP to an associated STA during the second duration;
   receive a trigger frame subsequent to the AP availability frame; and
   transmit second data in response to the trigger frame.
16. A non-transitory computer-readable medium storing instructions that, when executed by a processor of an access point (AP) cause the AP to perform operations, the operations comprising:
   transmitting a beacon indicating an availability window having a first duration;
   receiving first data within the first duration;
   modifying, during the first duration, the availability window by extending the first duration by a second duration; and
   transitioning to a power save state after the availability window expires.
17. The non-transitory computer-readable medium of item 16, wherein the operations further comprise:
   receiving while operating in a low power receive (LPR) state, a wake-up frame within the first duration, wherein the wake-up frame is one of an uplink (UL) multi-user (MU)-Request to Send (RTS) frame or a data frame; and
   transitioning to a full power state responsive to receiving the wake-up frame.
18. The non-transitory computer-readable medium of item 17, wherein the operations further comprise:
   transmitting a wake-up response frame responsive to receiving the wake-up frame; and
   receiving second data while operating in the full power state.
19. The non-transitory computer-readable medium of any of items 17-18 wherein the wake-up response frame comprises the second duration of the availability window, and wherein the wake-up response frame is configured to be received by a STA associated with the AP.
20. The non-transitory computer-readable medium of any of items 17-19, wherein the beacon comprises a wake-up response time, and wherein the operations further comprise:
   initiating transmission of an AP availability frame within the wake-up response time, wherein the AP availability frame comprises the second duration and indicates availability of the AP to an associated STA during the second duration, wherein the transitioning to the full power state occurs within the wake-up response time;
   transmitting a trigger frame to a STA corresponding to the wake-up frame; and
   receiving third data while operating in the full power state.

## Claims

1. An access point (AP) comprising:
a transceiver; and
a processor coupled to the transceiver, configured to:
transmit, via the transceiver, a beacon indicating an availability window having a first duration;
receive, via the transceiver, first data within the first duration;
modify, during the first duration, the availability window by extending the first duration by a second duration; and
transition the transceiver to a power save state after the availability window expires.

2. The AP of claim 1, wherein the processor is further configured to modify the availability window by extending the availability window for a third duration.

3. The AP of any of claims 1-2, wherein the beacon is a Traffic Indication Map (TIM) beacon or a Delivery Traffic Indication Map (DTIM) beacon, wherein the first duration of the availability window corresponding to the TIM beacon is shorter than the first duration of the availability window corresponding to the DTIM beacon.

4. The AP of any of claims 1-3, wherein the processor is further configured to:
receive, via the transceiver operating in a low power receive (LPR) state, a wake-up frame within the first duration, wherein the wake-up frame is one of an uplink (UL) Multi-user (MU)-Request to Send (RTS) frame or a data frame; and
transition the transceiver to a full power state responsive to receiving the wake-up frame.

5. The AP of claim 4, wherein the processor is further configured to:
transmit a wake-up response frame responsive to receiving the wake-up frame; and
receive second data via the transceiver operating in the full power state.

6. The AP of claim 5, wherein the wake-up response frame comprises the second duration of the availability window, and wherein the wake-up response frame is configured to be received by a STA associated with the AP.

7. The AP of any of claim 4-6, wherein the beacon comprises a wake-up response time, and the processor is further configured to:
initiate transmission of an AP availability frame within the wake-up response time, wherein the AP availability frame comprises the second duration and indicates availability of the AP to an associated STA during the second duration, wherein the transition of the transceiver to the full power state occurs within the wake-up response time; and
receive second data via the transceiver while operating in the full power state.

8. A station (STA) comprising:
a transceiver; and
a processor coupled to the transceiver, configured to:
receive a beacon indicating an availability window having a first duration;
transmit first data within the first duration; and
receive, during the first duration, an Access Point (AP) availability frame indicating a second duration modifying the availability window.

9. The STA of claim 8, wherein the processor is further configured to:
transmit, via the transceiver, a wake-up frame during the availability window, wherein the wake-up frame is one of an uplink (UL) multi-user (MU)-Request to Send (RTS) frame or a data frame.

10. The STA of claim 9, wherein the processor is further configured to:
receive a wake-up response frame, wherein the wake-up response frame comprises the second duration of the availability window, and wherein the wake-up response frame is configured to be received by a STA associated with the AP; and
transmit second data via the transceiver.

11. The STA of any of claims 9-10, wherein the wake-up response frame comprises an Availability Clear To Send (A-CTS) frame and wherein a Receiver Address (RA) field of the A-CTS frame comprises an address of the AP.

12. The STA of any of claims 9-11, wherein the beacon frame comprises a wake-up response time, and the process is further configured to:
receive the AP availability frame within the wake-up response time, wherein the AP availability frame comprises the second duration and indicates availability of the AP to an associated STA during the second duration;
receive a trigger frame subsequent to the AP availability frame; and
transmit second data in response to the trigger frame.

13. A non-transitory computer-readable medium storing instructions that, when executed by a processor of an access point (AP) cause the AP to perform operations, the operations comprising:
transmitting a beacon indicating an availability window having a first duration;
receiving first data within the first duration;
modifying, during the first duration, the availability window by extending the first duration by a second duration; and
transitioning to a power save state after the availability window expires.

14. The non-transitory computer-readable medium of claim 13, wherein the operations further comprise:
receiving while operating in a low power receive (LPR) state, a wake-up frame within the first duration, wherein the wake-up frame is one of an uplink (UL) multi-user (MU)-Request to Send (RTS) frame or a data frame; and
transitioning to a full power state responsive to receiving the wake-up frame.

15. The non-transitory computer-readable medium of claim 14, wherein the beacon comprises a wake-up response time, and wherein the operations further comprise:
initiating transmission of an AP availability frame within the wake-up response time, wherein the AP availability frame comprises the second duration and indicates availability of the AP to an associated STA during the second duration, wherein the transitioning to the full power state occurs within the wake-up response time;
transmitting a trigger frame to a STA corresponding to the wake-up frame; and
receiving third data while operating in the full power state.
